(19)

Europäisches
Patentamt
European
Patent Office
Office européen
des brevets

(11) **EP 4 588 221 B1**

(12) **EUROPEAN PATENT SPECIFICATION**

(45) Date of publication and mention
of the grant of the patent:
**29.07.2026  Bulletin 2026/31**

(21) Application number: **22786327.1**

(22) Date of filing: **15.09.2022**

(51) International Patent Classification (IPC):
*H04L 27/26* (2006.01)    *H04L 27/10* (2006.01)

(52) Cooperative Patent Classification (CPC):
**H04L 27/2613; H04L 27/103; H04L 27/26134;
H04L 27/2634; H04L 27/2639**

(86) International application number:
**PCT/EP2022/075598**

(87) International publication number:
**WO 2024/056176 (21.03.2024 Gazette 2024/12)**

(54) **METHODS AND APPARATUS FOR SPECTRAL SHAPING SIGNALS IN DISCRETE AFFINE
FREQUENCY TRANSFORM DOMAIN**

VERFAHREN UND VORRICHTUNG ZUR SPEKTRALFORMUNG VON SIGNALEN IN DISKRETEM
AFFINEM FREQUENZTRANSFORMATIONSBEREICH

PROCÉDÉS ET APPAREIL POUR UNE MISE EN FORME SPECTRALE DE SIGNAUX DANS UN
DOMAINE DE TRANSFORMÉE DE FRÉQUENCE AFFINE DISCRÈTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.07.2025  Bulletin 2025/30**

(73) Proprietor: **Huawei Technologies Co., Ltd.
Shenzhen, Guangdong 518129 (CN)**

(72) Inventor: **KSAIRI, Nassar
80992 Munich (DE)**

(74) Representative: **Roth, Sebastian et al
Mitscherlich PartmbB
Karlstraße 7
80333 München (DE)**

(56) References cited:
• **ALI BEMANI ET AL: "Affine Frequency Division
Multiplexing for Next Generation Wireless
Communications", ARXIV.ORG, CORNELL
UNIVERSITY LIBRARY, 201 OLIN LIBRARY
CORNELL UNIVERSITY ITHACA, NY 14853, 3
May 2022 (2022-05-03), XP091218996**

• **YIN HAORAN ET AL: "Pilot Aided Channel
Estimation for AFDM in Doubly Dispersive
Channels", 2022 IEEE/CIC INTERNATIONAL
CONFERENCE ON COMMUNICATIONS IN CHINA
(ICCC), IEEE, 11 August 2022 (2022-08-11), pages
308 - 313, XP034191931, DOI: 10.1109/
ICCC55456.2022.9880774**

• **BERGGREN FREDRIK ET AL: "Chirp-Convolved
Data Transmission", IEEE COMMUNICATIONS
LETTERS, IEEE SERVICE CENTER,
PISCATAWAY, NJ, US, vol. 25, no. 4, 7 December
2020 (2020-12-07), pages 1226 - 1230,
XP011848915, ISSN: 1089-7798, [retrieved on
20210408], DOI: 10.1109/LCOMM.2020.3042850**

• **CELLINI V ET AL: "A Multicarrier Architecture
Based Upon the Affine Fourier Transform", IEEE
TRANSACTIONS ON COMMUNICATIONS, IEEE
SERVICE CENTER, PISCATAWAY, NJ. USA, vol.
53, no. 5, 1 May 2005 (2005-05-01), pages 853 -
862, XP011132139, ISSN: 0090-6778, DOI:
10.1109/TCOMM.2005.847162**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

EP 4 588 221 B1

**Description**

TECHNICAL FIELD

The present disclosure generally relates to the field of wireless communications. For instance, this disclosure relates to spectral shaping affine frequency division multiplexing (AFDM) signals in discrete affine frequency transform (DAFT) domain.

BACKGROUND

Orthogonal chirp division multiplexing (OCDM) and AFDM are chirp-based multicarrier waveforms for wireless communications. OCDM is based on discrete Fresnel transform (DFnT), while AFDM is based on DAFT. DAFT is a generalization of discrete Fourier transform (DFT) and a linear transform characterized by a couple of parameters $(c_1,c_2)$. DFnT is a special case of DAFT. In DAFT, a transmitter uses an inverse discrete affine Fourier transform (IDAFT) to map its input symbols to discrete-time chirp signals parametrized with $(c_1,c_2)$ at its output. This is analogous to orthogonal frequency-division multiplexing (OFDM), which is based on DFT where an OFDM transmitter uses inverse discrete Fourier transform (IDFT) to map its input symbols to frequency subcarriers at its output. AFDM can achieve full diversity of linear time-varying (LTV) channels with low pilot overhead. AFDM can also provide spreading (or coverage) gain that is robust to mobility, carrier frequency offset (CFO), and phase noise. Therefore, AFDM is suitable for high mobility communications.

In both OCDM and AFDM, parameters $(c_1,c_2)$ are set so that each DAFT domain symbol, i.e., each symbol at the input of an IDAFT module of a transmitter, is mapped to a chirp that spans the whole bandwidth. The "whole bandwidth" in this disclosure may be understood as a frequency bandwidth equal to a sampling rate of a digital-to-analog converter (DAC) used to generate the signal. To control the bandwidth of these signals, the only way is to alter the sampling rate of the DAC. This limits the flexibility of multi-user multiplexing schemes and pilot design. Further, to preserve orthogonality among the chirps in OCDM and AFDM, values of the same sampling rate used by the DAC at the transmitter should also be used by an analog-to-digital converter (ADC) for sampling at a corresponding receiver. However, since the signal bandwidth is equal to the sampling rate, this places a very stringent constraint on an anti-aliasing filter that should be employed at the receiver before the ADC. Any non-zero roll-off of the antialiasing filter under these conditions could generate a signal at the output of the antialiasing filter that has a bandwidth larger than the sampling rate of the ADC. This results in violating the Nyquist constraint when sampling the output signal and, hence, in aliasing.

One of the main advantages of the chirp signals in general and of AFDM, in particular, is that the channel estimation performance can be achieved based on a chirp-based pilot sequence. Pilot sequences (or simply pilots) are signals known to receiving devices that are inserted (or mixed) in a transmitted signal, so that the receiving devices can estimate the effect of channel propagation on the transmitted signal. In long-term evolution (LTE) and new-radio (NR) systems, downlink pilots include downlink demodulation reference signals (DMRS) and channel state information reference signals (CSI-RS), while uplink pilots include uplink demodulation reference signals (DMRS) and sounding reference signals (SRS). Since the multi-chirp signal in AFDM is based on the discrete affine Fourier transform (DAFT), each chirp pilot obtained in AFDM is equivalently a DAFT domain symbol, which typically spans the whole bandwidth.

ALI BEMANI ET AL: "Affine Frequency Division Multiplexing for Next Generation Wireless Communications", ARXIV.ORG, CORNELL UNIVERSITY LIBRARY, 201 OLIN LIBRARY CORNELL UNIVERSITY ITHACA, NY 14853, 3 May 2022 (2022-05-03), XP091218996, discloses AFDM as a new chirp-based multicarrier waveform for high mobility communications.

YIN HAORAN ET AL: "Pilot Aided Channel Estimation for AFDM in Doubly Dispersive Channels", 2022 IEEE/CIC INTERNATIONAL CONFERENCE ON COMMUNICATIONS IN CHINA (ICCC), IEEE, 11 August 2022 (2022-08-11), pages 308-313, XP034191931, DOI: 10.1109/ICCC55456.2022.9880774, discloses two pilot aided channel estimation schemes for AFDM, named single pilot aided (SPA) and multiple pilots aided (MPA) respectively.

SUMMARY

Spectral shaping is commonly used in multiple access applications where modem communication systems are primarily based on. However, since each chirp pilot in AFDM spans the whole bandwidth, it brings challenges to spectral shaping.

It is an objective of the present disclosure to provide a device and a method for generating affine frequency division multiplexing (AFDM) signals that have a controllable bandwidth occupancy. The foregoing and other objectives may be achieved by the features of the independent claims. Further implementation forms are apparent from the dependent claims, the description, and the drawings.

According to a first aspect, a device for generating a signal is provided. The device is configured to obtain a first pilot sequence according to a sequence length and a frequency bandwidth. The first pilot sequence comprises a set of pilot symbols. The first pilot sequence is spectrally shaped. The device is further configured to obtain a plurality of chirp signals. The number of the chirp signals is equal to the sequence length. The device is further configured to generate a linear combination of the plurality of chirp signals with the set of pilot symbols serving as linear combination coefficients, to obtain a second pilot sequence.

In this way, the obtained second pilot sequence does not span the whole bandwidth. The second pilot sequence can be limited to a certain bandwidth frequency, e.g., according to different bandwidth requirements for different transmission needs.

Optionally, the device may be further configured to transmit the second pilot sequence, e.g., to a receiving end. The transmitted secod pilot sequence may be used for channel estimation.

In an implementation form of the first aspect, for generating the linear combination of the plurality of chirp signals, the device may be configured to map the first pilot sequence to a consecutive input of an IDAFT modulation.

In this way, the first pilot sequence in the DAFT domain is transformed into the second pilot sequence in the time domain via the IDAFT modulation.

In an implementation form of the first aspect, before generating the linear combination of the plurality of chirp signals, the device may be configured to shift the first pilot sequence in a frequency domain, by elementwise multiplying the first pilot sequence with a frequency shifting vector according to a frequency value.

In this way, the second pilot sequence can be fitted to a target frequency band. That is, the first pilot sequence can be shifted in the frequency domain to make its signal bandwidth centered around the frequency value. Accordingly, the signal bandwidth of the second pilot sequence is also centered around the frequency value.

In an implementation form of the first aspect, the device may be configured to obtain the first pilot sequence through a pre-defined lookup table by using the sequence length and the frequency bandwidth as indexes.

By storing the first pilot sequence in the lookup table, the device no longer needs to calculate the first pilot sequence in real-time. Therefore, the computing resources of the device can be saved and the processing delay in transmitting the signal can be reduced.

In an implementation form of the first aspect, the device may be configured to obtain the first pilot sequence by the following steps:

- obtaining an initial sequence according to the sequence length;
- obtaining a plurality of projection sequences, in which each of the plurality of projection sequences has the same sequence length of the initial sequence and is bandwidth limited to the frequency bandwidth; and
- generating an orthogonal projection of the initial sequence onto the span of the plurality of projection sequences, by left multiplying the initial sequence with a projection matrix $PP^H$, to obtain the first pilot sequence, in which columns of matrix P are the plurality of projection sequences.

These steps may be seen as a first pilot sequence generation method used by the device for obtaining the first pilot sequence.

Optionally, the pre-defined lookup table may comprise a plurality of first pilot sequences generated using the first pilot sequence generation method according to different combinations of sequence length and frequency bandwidth.

In an implementation form of the first aspect, for obtaining the initial sequence, the device may be configured to generate the initial sequence based on a cell identity and/or a scrambling sequence.

In this way, the second and the first pilot sequences, which are based on the initial sequence, can be made to vary from one serving cell area to another or to vary over time, for example, to reduce inter-cell interference.

In an implementation form of the first aspect, the plurality of projection sequences may comprise discrete prolate spheroidal sequences (DPSS) corresponding to the sequence length and the frequency bandwidth.

The DPSS has optimal time-frequency localization. Therefore, the generated first pilot sequence can be better localized inside a target frequency band compared to another first pilot sequence of the same length that has been generated using projection sequences other than the DPSS. Thanks to this property, the overhead of using the set of pilot symbols in the first pilot sequence serving as the linear combination coefficients can be reduced. Because using DPSS for orthogonal projection can achieve good frequency localization of the pilot signal with fewer chirp carriers, thus making more chirp carriers available for data transmission.

In an implementation form of the first aspect, the plurality of projection sequences may comprise columns of a DFT matrix corresponding to the sequence length and the frequency bandwidth.

Using the DFT matrix as the projection sequences is particularly effective for sequence lengths of large values.

In an implementation form of the first aspect, the device may be further configured to:

- obtain a plurality of the first pilot sequences that are bandwidth-limited to non-overlapping frequency bands; and
- provide the plurality of the first pilot sequences as a same input or overlapping inputs for IDAFT modulation.

In this way, the plurality of the second pilot sequences obtained as outputs of the IDAFT modulation are still orthogonal with each other.

In an implementation form of the first aspect, the device may be further configured to:

- obtain a plurality of the first pilot sequences that are bandwidth-limited to overlapping frequency bands; and
- provide the plurality of the first pilot sequences as non-overlapping inputs for IDAFT modulation.

In this way, the plurality of the second pilot sequences obtained as outputs of the IDAFT modulation are still orthogonal with each other.

In an implementation form of the first aspect, the device may be further configured to:

- obtain a set of data symbols;
- provide the set of data symbols as an input of an $N_{FFT}$-point inverse discrete Fourier transformation (IDFT);
- set one or more data symbols of the input of the $N_{FFT}$-point IDFT to zero and obtain an output of the $N_{FFT}$-point IDFT; and
- provide an aggregation of the output of the $N_{FFT}$-point IDFT and the first pilot sequence as an input of an $N_{DAFT}$-point IDAFT, to obtain an output of the $N_{DAFT}$-point IDAFT, in which $N_{FFT}$ is less than $N_{DAFT}$.

The output of the $N_{DAFT}$-point IDFAT comprises both to-be-transmitted pilot symbols (e.g., comprised in the second pilot sequence) and data symbols, e.g. superimposed in the time domain. In this way, both the to-be-transmitted pilot symbols and the data symbols can be spectrally shaped to fit a target spectral occupancy.

Notably, the "FFT" of $N_{FFT}$ stands for "fast Fourier transform". $N_{FFT}$ denotes the number of input points of the IDFT performed by the device. Likewise, $N_{DAFT}$ denotes the number of input points of the IDAFT performed by the device. $N_{FFT}$ and $N_{DAFT}$ are positive integers.

In an implementation form of the first aspect, the device may be an $N_{DAFT}$-point discrete affine Fourier transform-spread affine frequency division multiplexing (DAFT-s-AFDM) transmitter. The DAFT-s-AFDM transmitter may be further configured to:

- obtain a set of data symbols;
- provide the set of data symbols as an input of an $N_{FFT}$-point DAFT;
- set one or more data symbols of the input of the $N_{FFT}$-point DAFT to zero and obtain an output of the $N_{FFT}$-point DAFT; and
- provide an aggregation of the output of the $N_{FFT}$-point DAFT and the first pilot sequence as an input of an $N_{DAFT}$-point IDAFT, to obtain an output of the $N_{DAFT}$-point IDAFT, in which $N_{FFT}$ is less than $N_{DAFT}$.

The output of the $N_{DAFT}$-point IDFAT comprises both to-be-transmitted pilot symbols (e.g., comprised in the second pilot sequence) and data symbols superimposed in the time domain. In this way, both the to-be-transmitted pilot symbols and the data symbols can be spectrally shaped to fit a target spectral occupancy.

In an implementation form of the first aspect, the first pilot sequence may be a downlink demodulation reference signal or a channel state information reference signal.

In an implementation form of the first aspect, the first pilot sequence may be an uplink demodulation reference signal or a sounding reference signal.

According to a second aspect, a method for generating a signal is provided. The method comprises the following steps:

- obtaining, by a device, a first pilot sequence according to a sequence length and a frequency bandwidth, in which the first pilot sequence is spectrally shaped and comprises a set of pilot symbols;
- obtaining, by the device, a plurality of chirp signals, in which the number of the plurality of chirp signals is equal to the sequence length; and
- generating, by the device, a linear combination of the plurality of chirp signals with the set of pilot symbols serving as linear combination coefficients, to obtain a second pilot sequence.

In an implementation form of the second aspect, the step of generating the linear combination of the plurality of chirp signals may comprise mapping the first pilot sequence to a consecutive input of an IDAFT modulation.

In an implementation form of the second aspect, before generating the linear combination of the plurality of chirp signals, the method may further comprise shifting the first pilot sequence in a frequency domain, by elementwise multiplying the first pilot sequence with a frequency shifting vector according to a frequency value.

In an implementation form of the second aspect, the first pilot sequence may be obtained through a pre-defined lookup table by using the sequence length and the frequency bandwidth as indexes.

In an implementation form of the second aspect, the step of obtaining the first pilot sequence may comprise the following steps:

- obtaining an initial sequence according to the sequence length;
- obtaining a plurality of projection sequences, in which each of the plurality of projection sequences has the same sequence length of the initial sequence and is bandwidth limited to the frequency bandwidth; and
- generating an orthogonal projection of the initial sequence onto the span of the plurality of projection sequences, by left multiplying the initial sequence with a projection matrix $PP^H$, to obtain the first pilot sequence, in which columns of matrix $P$ are the plurality of projection sequences.

In an implementation form of the second aspect, the step of obtaining the initial sequence may comprise generating the initial sequence based on a cell identity and/or a scrambling sequence.

In an implementation form of the second aspect, the plurality of projection sequences may comprise discrete prolate spheroidal sequences corresponding to the sequence length and the frequency bandwidth.

In an implementation form of the second aspect, the plurality of projection sequences may comprise columns of a discrete Fourier transform matrix corresponding to the sequence length and the frequency bandwidth.

In an implementation form of the second aspect, the method may further comprise the following steps:

- obtaining a plurality of the first pilot sequences that are bandwidth-limited to non-overlapping frequency bands; and
- providing the plurality of first pilot sequences as a same input or overlapping inputs for IDAFT modulation.

In an implementation form of the second aspect, the method may further comprise the following steps:

- obtaining a plurality of the first pilot sequences that are bandwidth-limited to overlapping frequency bands; and
- providing the plurality of the first pilot sequences as non-overlapping inputs for IDAFT modulation.

In an implementation form of the second aspect, the method may further comprise the following steps:

- obtaining a set of data symbols;
- providing the set of data symbols as an input of an $N_{FFT}$-point IDFT;
- setting one or more data symbols of the input of the $N_{FFT}$-point IDFT to zero and obtain an output of the $N_{FFT}$-point IDFT; and
- providing an aggregation of the output of the $N_{FFT}$-point IDFT and the first pilot sequence as an input of an $N_{DAFT}$-point IDAFT, to obtain an output of the $N_{DAFT}$-point IDAFT, in which $N_{FFT}$ is less than $N_{DAFT}$.

In an implementation form of the second aspect, the method may be performed by an $N_{DAFT}$-point DAFT-s-AFDM transmitter as the device. The method may further comprise the following steps:

- obtaining, by the transmitter, a set of data symbols;
- providing, by the transmitter, the set of data symbols as an input of an $N_{FFT}$-point DAFT;
- setting, by the transmitter, one or more data symbols of the input of the $N_{FFT}$-point DAFT to zero and obtain an output of the $N_{FFT}$-point DAFT; and
- providing, by the transmitter, an aggregation of the output of the $N_{FFT}$-point DAFT and the first pilot sequence as an input of an $N_{DAFT}$-point IDAFT, to obtain an output of the $N_{DAFT}$-point IDAFT, in which $N_{FFT}$ is less than $N_{DAFT}$.

In an implementation form of the second aspect, the first pilot sequence may be a downlink demodulation reference signal or a channel state information reference signal.

In an implementation form of the second aspect, the first pilot sequence may be an uplink demodulation reference signal or a sounding reference signal.

The method of the second aspect and its implementation forms may achieve the same advantages and effects as described above for the device of the first aspect and its implementation forms.

A third aspect of this disclosure provides a computer program comprising instructions which, when the program is executed by a computer, cause the computer to perform the method according to the second aspect or any of its implementation forms.

A fourth aspect of this disclosure provides a non-transitory storage medium storing executable program code which, when executed by a processor, causes the method according to the second aspect or any of its implementation forms to be performed.

It has to be noted that all devices, elements, units, and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities.

Even if, in the following description of specific embodiments, a specific functionality or step to be performed by external entities is not reflected in the description of a specific detailed element of that entity, which performs that specific step or functionality, it should be clear for a skilled person that these methods and functionalities can be implemented in respective software or hardware elements, or any kind of combination thereof.

BRIEF DESCRIPTION OF DRAWINGS

The above-described aspects and implementation forms will be explained in the following description of specific embodiments in relation to the enclosed drawings, in which:

FIG. 1     shows an example of a device for generating a signal according to this disclosure;
FIG. 2     shows examples of an initial pilot sequence and a first pilot sequence according to this disclosure;
FIG. 3     shows an example of an orthogonal projection matrix generation according to this disclosure;
FIG. 4     shows an example of a transmitter according to this disclosure;
FIG. 5     shows a further example of a transmitter according to this disclosure;
FIG. 6     shows an example for computing a center frequency of a band to be nulled. according to this disclosure;
FIG. 7     shows a diagram of a method for generating a signal according to this disclosure;
FIG. 8     shows an example of a device according to this disclosure;
FIG. 9     shows an example of a bandwidth relation between signals of the same length at the input and the output of an IDAFT module;
FIG. 10    shows an example of a bandwidth relation between signals of different lengths at the input and the output of an IDAFT module; and
FIG. 11    shows an example of a communication system according to this disclosure Parts of description and drawing which are not covered by the claims are not presented as embodiments of the present application, but as examples useful for understanding the present application.

DETAILED DESCRIPTION OF EMBODIMENTS

Next-generation wireless systems are expected to operate on many frequency bands, including bands centered around very high-frequency carriers and to serve users in high-mobility scenarios. AFDM is a new waveform that improves transmission performance in both these use cases. AFDM is based on the DAFT (or IDAFT) which can be used to generate multi-chirp signals characterized by a number of tunable parameters.

When an $N_{DAFT}$-point IDAFT module is used to generate a signal $\{x_n\}_{n=0,\cdots,N_{DAFT}-1}$ from samples $\{s_m\}_{m=0,\ldots,N_{DAFT}-1}$ , then the signal can be represented as follows:

$$x_n = \frac{1}{\sqrt{N_{DAFT}}} \sum_{m=0}^{N_{DAFT}-1} s_m \underbrace{e^{j2\pi\left(c_1 n^2 + \frac{nm}{N_{DAFT}} + c_2 m^2\right)}}_{\text{discrete chirp}}, \qquad n = 0, \ldots, N_{DAFT} - 1$$

$$(1)$$

The tunable parameters for generating the multi-chirp signals may refer to $(c_1, c_2)$ of Equation 1. Signals generated with the $N_{DAFT}$-point IDAFT may satisfy $(c_1, c_2) = \left(\mp\frac{1}{2N_{DAFT}}, \mp\frac{1}{2N_{DAFT}}\right)$.

A continuous-time affine Fourier transform (AFT) $\mathcal{F}_{(a,b,c)}(u)$ with parameter matrix $[a, b; c, d]$ of a signal $f(t)$ can be represented as follows:

$$\mathcal{F}_{(a,b,c)}(u) = \sqrt{\frac{1}{\iota 2\pi b}} e^{\frac{\iota d}{2b}u^2} \int e^{-\frac{\iota}{b}ut} e^{\frac{\iota a}{2b}t^2} f(t)dt \qquad (2)$$

A Fourier transform (FT) is an AFT with $[a_2, b_2; c_2, d_2] = [0,1; -1,0]$, and the Fresnel transform (FnT) is an AFT with

$[a_1, b_1; c_1, d_1] = [1, \frac{1}{2\pi\alpha}; 0,1]$ , with $\alpha$ being the chirp rate. A DAFT with $(c_1, c_2) = \left(\mp \frac{1}{2N_{\text{DAFT}}}, \mp \frac{1}{2N_{\text{DAFT}}}\right)$ is one possible discretization of the FnT. The composition (additive) property of the AFT dictates that the composition of two affine Fourier transforms with respective parameter matrices $[a_1, b_1; c_1, d_1]$ and $[a_2, b_2; c_2, d_2]$ is an AFT $\mathcal{F}_{(a,b,c,d)}(u)$ with parameter matrix as follows:

$$\begin{bmatrix} a & b \\ c & d \end{bmatrix} \triangleq \begin{bmatrix} a_2 & b_2 \\ c_2 & d_2 \end{bmatrix} \times \begin{bmatrix} a_1 & b_1 \\ c_1 & d_1 \end{bmatrix} \tag{3}$$

Using the additive property of the AFT, the FT applied to the FnT is a composite AFT $\mathcal{F}_{(a,b,c,d)}(u)$ with

$$\begin{bmatrix} a & b \\ c & d \end{bmatrix} = \begin{bmatrix} 0 & 1 \\ -1 & 0 \end{bmatrix} \times \begin{bmatrix} 1 & \frac{1}{2\pi\alpha} \\ 0 & 1 \end{bmatrix} = \begin{bmatrix} 0 & 1 \\ -1 & \frac{1}{2\pi\alpha} \end{bmatrix} \tag{4}$$

The composite AFT $\mathcal{F}_{\left(0,1,-1,\frac{-1}{2\pi\alpha}\right)}(u)$ of the signal $f(t)$ with FT $\tilde{f}(u)$ is as follows:

$$\mathcal{F}_{\left(0,1,-1,\frac{-1}{2\pi\alpha}\right)}(u) = \sqrt{\frac{1}{\iota 2\pi}} e^{\frac{-\iota}{4\pi\alpha}u^2} \int e^{-\iota u t} f(t) dt$$

$$= \sqrt{\frac{1}{\iota 2\pi}} \underbrace{e^{\frac{-\iota}{4\pi\alpha}u^2}}_{\text{Transform-domain chirping}} \times \underbrace{\tilde{f}(u)}_{\text{The FT of the signal}} \tag{5}$$

Therefore, if the signal $f(t)$ has a finite bandwidth in the variable of the composite transform i.e., if the signal $f(t)$ satisfies that $\mathcal{F}_{\left(0,1,-1,\frac{-1}{2\pi\alpha}\right)}(u)$ has a certain finite support, then it satisfies that $\tilde{f}(u)$ has the same finite support. That is, $f(t)$ has a finite bandwidth in the frequency domain.

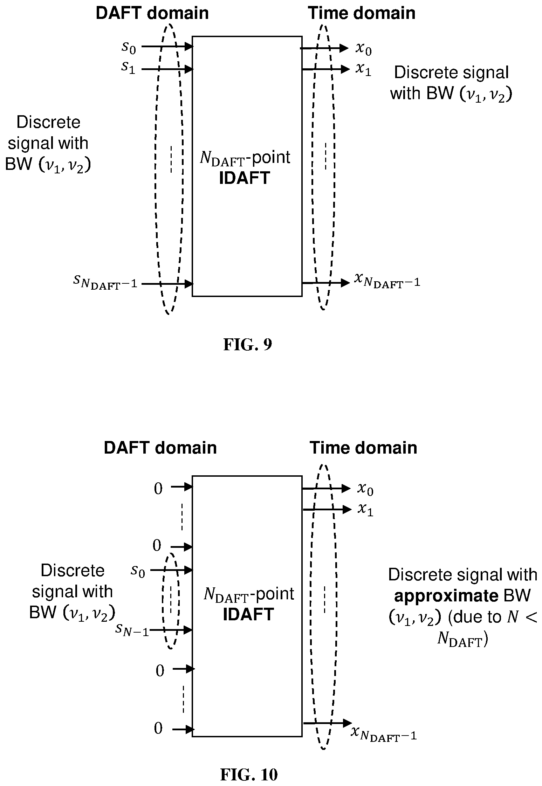

In discrete time, this means that, if the sequence $\{s_m\}_{m=0\ldots N_{\text{DAFT}}-1}$ at the input of the IDAFT module with $(c_1, c_2) = \left(\mp \frac{1}{2N_{\text{DAFT}}}, \mp \frac{1}{2N_{\text{DAFT}}}\right)$ has a spectrum that is zero outside a band $(v_1, v_2) \subset \left(-\frac{1}{2}, \frac{1}{2}\right)$ (in digital frequencies), then the spectrum of the signal $\{x_n\}_{n=0\ldots N_{\text{DAFT}}-1}$ at the output of the IDAFT module will have the same band $(v_1, v_2)$ as support. This is illustrated in FIG. 9.

In a further case, the sequence at the input of the IDAFT module has $N$ non-zero values $\{s_m\}_{m=0\ldots N-1}$, $N < N_{\text{DAFT}}$. The N non-zero values $\{s_m\}_{m=0\ldots N-1}$ occupy contiguous (consecutive) positions of the $N_{\text{DAFT}}$-long sequence input of the IDAFT module. In this case, if the N-point DFT of the shorter sequence $\{s_m\}_{m=0\ldots N-1}$ has as support the band $(v_1, v_2) \subset \left(-\frac{1}{2}, \frac{1}{2}\right)$ (in digital frequencies), then most of the power of the signal $\{x_n\}_{n=0\ldots N_{\text{DAFT}}-1}$ at the output of the IDAFT module can be approximately (instead of exactly) contained in the same interval $(v_1, v_2)$ in digital frequencies as illustrated in FIG. 10. The approximate nature of the relation in the case $N < N_{\text{DAFT}}$ is due to power leakage in the spectrum of the $N_{\text{DAFT}}$-long sequence at the input of the IDAFT module to outside the frequency range $(v_1, v_2)$ due to the zero-padding used to form it by adding zeros to the N non-zero values $\{s_m\}_{m=0\ldots N-1}$.

Some aspects of the present disclosure relate to sequence values $\{s_m\}_{m=0\ldots N-1}$ generation at the input of the IDAFT module to design a DAFT domain pilot signal, so that this leakage in the spectrum of the pilot signal can be minimized.

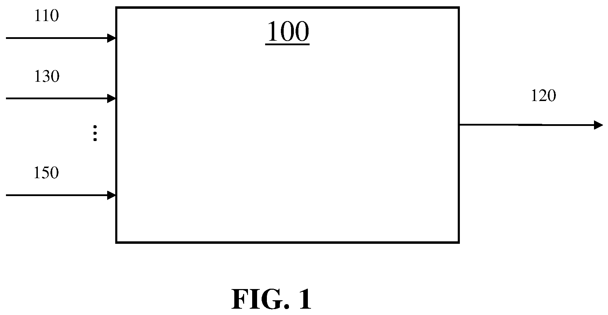

FIG. 1 shows a device for generating a signal according to this disclosure. The device 100 is configured to obtain a first pilot sequence 110 according to a sequence length and a frequency bandwidth. The first pilot sequence 110 comprises a set of pilot symbols.

Optionally, the device may be a transmitter or may be part of a transmitter. The transmitter may be one of multiple user terminals transmitting signals in uplink channels of a cellular network. The transmitter may alternatively be a base station or an access point transmitting signals in downlink channels of the cellular network. Optionally, the cellular network may be a 4th generation (4G) network, a 5G network, a 6G network, or any variant thereof.

Optionally, the first pilot sequence may be obtained by any conventional means for generating a pilot sequence for a cellular network. The sequence length $N_p$ and the frequency bandwidth $W < 1$ in digital frequencies may be determined according to system requirements and/or configurations of the cellular network. For example, the sequence length may be set according to the smallest value of the frequency bandwidth the sequence must occupy so that the length is the larger the smaller the bandwidth is, and the frequency bandwidth may be at least equal to channel bandwidth of the channel to be estimated. Optionally, to obtain channel estimates for the frequency band assigned to a data signal, the first pilot sequence may be assigned at least the same bandwidth as that of the data signal. The pilot symbols comprised in the first pilot sequence may be used by a receiver to obtain channel estimates.

The device is further configured to obtain a plurality of chirp signals. The number of the plurality of chirp signals is equal to the first sequence length. The device is further configured to generate a linear combination of the plurality of chirp signals with the set of first pilot symbols serving as linear combination coefficients, to obtain a second pilot sequence.

Optionally, the chirp signals may be determined by the device for the AFDM waveform. Each chirp signal may be characterized by a pair of parameters $(c_1, c_2)$. In this discourse, multiple chirp signals are used, and the number of the chirp signals is equal to the sequence length of the first pilot sequence. The pilot symbols comprised in the first pilot sequence are used as the linear combination coefficients to linearly combine the plurality of chirp signals, to obtain the second pilot sequence.

The obtained second pilot sequence is a pilot sequence to be transmitted by the device for channel estimation of the receiver. The obtained second pilot sequence can be spectrally shaped to fit a target spectral occupancy equal to $W < 1$ in digital frequencies while having finite support of a length $N_p$ that can be much smaller than the DAFT domain size $N_{DAFT}$. It is noted that the frequency bandwidth $W$ used in this disclosure should be understood as a relative bandwidth with respect to the whole bandwidth.

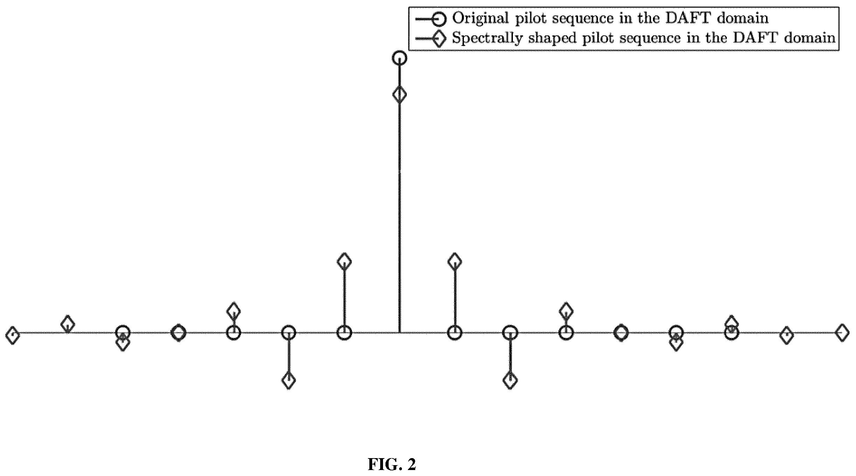

FIG. 2 shows examples of an initial pilot sequence and a first pilot sequence according to this disclosure. One example of the initial pilot sequence is labelled "original pilot sequence in the DAFT domain" in FIG. 2. The initial pilot sequence has only one non-zero sample and 15 zero samples $(N_p = 16)$. Such a sequence is not band-limited, and its 16-point DFT has a constant amplitude that is non-zero. If the samples of this initial pilot sequence are used as linear combination coefficients to generate the second pilot sequence, the latter will consist of one chirp signal (corresponding to the one non-zero sample of the first sequence) and will thus not be band-limited.

FIG. 2 shows another example of the first pilot sequence, which is labelled "spectrally shaped pilot sequence in the DAFT domain". The first pilot sequence in this example is generated in such a way that the 16-point DFT of the sequence has most of its energy concentrated in a sub-band of width $W < 1$ in digital frequencies centered around the zero frequency. When these samples of the first pilot sequence are used as linear combination coefficients to generate the second pilot sequence, the second pilot sequence may comprise a linear combination of multiple (e.g., 16) chirp signals and may in its turn have most of its energy concentrated in a sub-band of width $W < 1$ in digital frequencies centered around the zero frequency. In this way, the second pilot sequence can be band-limited.

Optionally, for generating the linear combination of the plurality of chirp signals, the device may be configured to map the first pilot sequence to $N_p$ consecutive inputs of an IDAFT modulation module. The IDAFT modulation module may be the device, or may be a part of the device. The IDAFT modulation module may be configured to perform an $N_{DAFT}$-point IDAFT. The operation of the IDAFT performed by the IDAFT modulation module can be seen as a linear combination, which may be as follows:

$$u_n = \frac{1}{\sqrt{N_{DAFT}}} \sum_{m=0}^{N_p-1} p_m \varnothing_n(m),$$

$$\varnothing_n(m) = e^{j2\pi\left(c_1 n^2 + \frac{nm}{N_{DAFT}} + c_2 m^2\right)}, \qquad m \text{ and } n = 0, \dots, N_p - 1, \qquad (7)$$

As illustrated in Equation 7, $\boldsymbol{p} = [p_0, \dots, p_{N_p-1}]$ refers to the first pilot sequence, $p_m$ refers to the $m$-th pilot symbol comprised in the first pilot sequence, $[\varnothing_0(m), \dots, \varnothing_{N_{DAFT}-1}(m)])$ refers to the m-th chirp signal, $u_n$ refers to the n-th time domain sample comprised in the second pilot sequence, and $\boldsymbol{u} = [u_0, \dots, u_{N_{DAFT}-1}]$ refers to the second pilot sequence.

Optionally, before generating the linear combination of the plurality of chirp signals, the device may be configured to shift the first pilot sequence in a frequency domain, by elementwise multiplying the first pilot sequence with a frequency shifting vector according to a frequency value.

The frequency shifting vector may be defined as:

$$\boldsymbol{e}_{v_c} = \begin{bmatrix} 1 & e^{j2\pi v_c} & \dots & e^{j2\pi v_c(N_p-1)} \end{bmatrix}^{\mathrm{T}} \qquad (8)$$

where $v_c$ refers to the frequency value. The device may be configured to calculate:

$$e_{v_c} \odot p \qquad\qquad (9)$$

where $\odot$ refers to elementwise (or Hadamard) multiplication.

In this way, the first pilot sequence and the obtained second pilot sequence can have a signal bandwidth centered around the frequency value $v_c$. This frequency value may be a center frequency of a to-be-estimated channel.

For obtaining the first pilot sequence, the device may be configured to obtain an initial sequence according to the sequence length. For example, the device may determine a pilot value $p_{ini}$ according to a preset function of higher-layer parameters, such as cell ID, scrambling sequence, etc. Given a sequence length $N_p$, the device may pad the value $p_{ini}$ with $N_p-1$ zeros to form an $N_p$-entry vector $p_{ini} = [p_{ini}{}^T$ as the initial sequence. The device may be further configured to obtain a plurality of projection sequences. Each projection sequence is an $N_p$-entry vector and is bandwidth limited to a frequency bandwidth of (-W/2, W/2). It should be understood that by defining a sequence as bandwidth limited to a frequency bandwidth of (-W/2, W/2), it means that $N_p$-point DFT of the sequence is mostly concentrated within the digital frequency band (-W/2, W/2). The plurality of projection sequences may be used as columns to form a projection matrix **P**. The columns of the projection matrix **P** are orthogonal, therefore, the projection matrix **P** can be also referred to as an orthogonal projection matrix **P**. This is to project the initial sequence onto the span of the frequency bandwidth of (-W/2, W/2) and keep the projected sequences orthogonal. In general, the device may be configured to calculate $\overline{e}_{v_c} \odot (PP^H) \times p_{ini}$ to obtain the first pilot sequence.

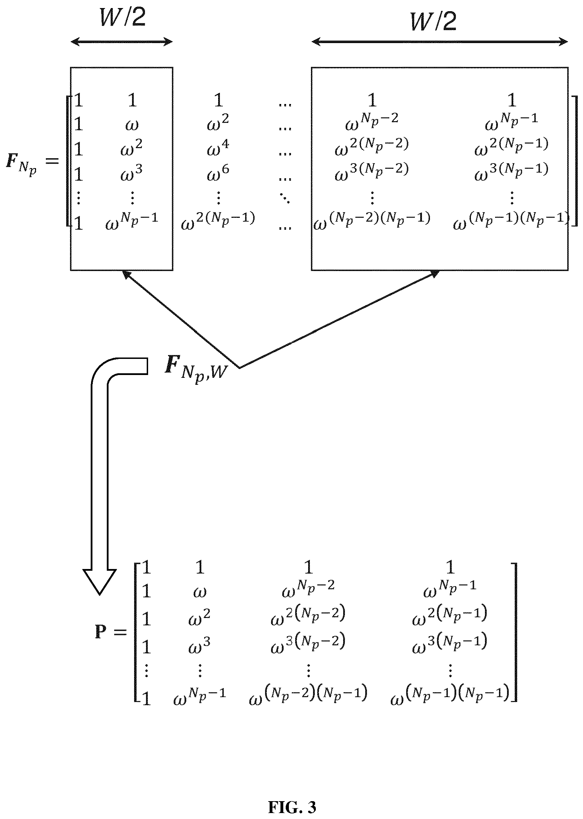

FIG. 3 illustrates an example of an orthogonal projection matrix generation according to this disclosure. The orthogonal projection matrix is chosen as $P = F_{N_p,W}$, which is a sub-matrix of an $N_p$-point DFT matrix $F_{N_p}$. The columns of the DFT matrix correspond to digital frequencies inside an interval $\left(-\frac{W}{2}, \frac{W}{2}\right)$. Let $\omega = e^{-j2\pi/N_p}$, then the construction of $F_{N_p,W}$ from $F_{N_p} \triangleq [\omega^{kn}]_{k=0\ldots N_p-1, n=0\ldots N_p-1}$, which is illustrated in FIG. 3.

The device may be configured to generate an orthogonal projection of the initial sequence onto the span of the plurality of projection sequences, by left multiplying the initial sequence with a projection matrix $PP^H$, to obtain the first pilot sequence.

The orthogonal projection matrix **P** generated based on the $N_p$-point DFT matrix is effective for large values of $N_p$, due to the time-frequency localization properties of the columns of the DFT matrix. Alternatively, the orthogonal projection matrix may be generated based on discrete prolate spheroidal sequences (DPSS). The DPSS may also be referred to as a Slepian sequence. That is, the plurality of projection sequences may be DPSS corresponding to the sequence length and the frequency bandwidth.

Given a sequence length $N$ and frequency bandwidth $W \in (0,1)$ in digital frequencies, $(N, W)$-DPSS comprise $N$ vectors that are eigenvectors of a prolate matrix $B_{N,W}$.

$$\left[B_{N,W}\right]_{m,n} = \frac{\sin 2\pi W (m - n)}{\pi(m - n)}. \qquad\qquad (10)$$

Given an approximation parameter $\varepsilon < 1$, the N vectors can be arranged as columns of a matrix $S_{N,W}$, as follows:

$$S_{N,W} = \left[ \underbrace{S_{N,W}^{1,1-\epsilon}}_{\substack{\epsilon-\text{power outside } \left(-\frac{W}{2},\frac{W}{2}\right) \\ \text{approximately } \lfloor NW \rfloor \text{ columns}}} \quad \underbrace{S_{N,W}^{1-\epsilon,\epsilon}}_{\log N \log\frac{1}{\epsilon} \text{ columns}} \quad \underbrace{S_{N,W}^{\epsilon,0}}_{\epsilon-\text{power inside}\left(-\frac{W}{2},\frac{W}{2}\right)} \right]. \qquad (11)$$

$S_{N,W}^{1,1-\epsilon}$ may be used as the projection matrix **P**. Projecting a vector **x** of signal samples on the first $\lfloor NW \rfloor$ $(N,W)$-DPSS vectors with good spectral containment represented by the columns of the projection matrix $S_{N,W}^{1,1-\epsilon}$ results in a signal $S_{N,W}^{1,1-\epsilon}\left(S_{N,W}^{1,1-\epsilon}\right)^T$ **x** as the first pilot sequence, which is with only $\varepsilon$ power content outside $\left(-\frac{W}{2}, \frac{W}{2}\right)$. This has a better time-frequency localization of the columns of $S_{N_p,W}^{1,1-\epsilon}$ compared to those of $F_{N_p,W}$. Therefore, the first pilot sequence generated based on the DPSS may be better localized inside the digital frequency band $\left(v_c - \frac{W}{2}, v_c + \frac{W}{2}\right)$ for the same value of $N_p$. FIG. 2 is generated based on the DPSS.

It is noted that the orthogonal projection operation (based on the DFT matrix or the DPSS) for pilot sequence generation can be implemented either as an "online" mode or an "off-line" mode. In the "online" mode, the orthogonal projection may be performed by an actual module of the device that computes the projection result "online" each time a frame of a to-be-transmitted signal is generated. Alternatively, in the "off-line" mode, the device may not be configured to perform the projection steps. Instead, the device may be configured to obtain the result of the projection, i.e., the first pilot sequence in a look-up table indexed with respect to parameters of the sequence length $N_p$ and frequency bandwidth $W$. In the "off-line" mode, different first pilot sequences may be generated in advance using the sequence generation methods mentioned above (based on the DFT matrix or the DPSS) for a number of different combinations of parameters $N_p$ and $W$ (assuming $p_{ini} = 1$ and $v_c = 0$). When a second pilot sequence of length $N_p$ and band-limited to a digital frequency range (

$$v_c - \frac{W}{2}, v_c + \frac{W}{2})$$ is needed and when the values of $N_p$ and $W$ are in the look-up table, then the projection result may be

denoted by $p(N_p, W$ can be computed by the device as $p_{ini}e_{v_c} \odot p(N_p, WN_p, W$ in the look-up table, then the "online" computation of the first pilot sequence using the orthogonal projection method described above is carried out by the device.

The device may be further configured to map the first pilot sequence to a consecutive input of an IDAFT modulation. The device may further comprise an IDAFT module adapted to perform the IDAFT modulation. The first pilot sequence is a pilot sequence in a DAFT domain. To transmit the first pilot sequence, it needs to be mapped to inputs of the IDAFT module and transformed into a signal in a time domain.

Optionally, the device may be configured to obtain multiple first pilot sequences. When there are multiple first pilot sequences to be transmitted, the multiple pilot sequences are bandwidth limited to a plurality of non-overlapping frequency bands, the multiple first pilot sequences can be mapped to the same or overlapping inputs of the IDAFT modulation without losing orthogonality. Because on the receiver side, received samples can be separated in the frequency domain. When the multiple first pilot sequences are bandwidth limited to a same frequency band, they need to be mapped to non-overlapping inputs of the IDAFT modulation to guarantee their orthogonality. The multiple first pilot sequence may be used in various scenarios. For instance, several pilot sequences bandwidth limited to non-overlapping frequency bands may be needed to be transmitted to user terminals from downlink or transmitted from user terminals from uplink, where the user terminals are assigned with those non-overlapping frequency bands. Also, even for the same frequency band, more than one pilot sequence might be needed. For instance, in multi-user multiple-input multiple-output (MU-MIMO) techniques, on the same frequency band, there may be signals transmitted from/to different antenna ports of a multi-antenna user terminal or signals transmitted from a multi-antenna base station to different user terminals, wherein the signals are multiplexed in a special domain using MU-MIMO techniques. Another example of using multiple first pilot sequences is when an effective DAFT domain channel varies with respect to the DAFT domain index due to mobility, tracking the effective DAFT domain channel requires multiple first pilot sequences within the DAFT domain frame. In the latter case, the $N_p$ symbols of one first pilot sequence are not sufficient to estimate all the entries of the $N_{DAFT} \times N_{DAFT}$ effective channel matrix in the DAFT domain. In this case, multiple (e.g., $N_{PS} > 1$) first pilot sequences may be mapped to $N_{PS}$ groups of consecutive $N_p$ inputs of the IDAFT modulation module.

In this disclosure, the device may be further configured to perform the following pilot sequence transmission method. Assuming there are $N_{PS}$ $(N_{PS} > 1)$ first pilot sequences to be transformed and transmitted as in the second pilot sequences, and each first/second sequence is bandwidth limited to one of $N_B$ $(N_{PS} \geq N_B)$ non-overlapping frequency bands $\{\mathcal{B}_b\}_{b=1,...,N_B}$ (each $\mathcal{B}_b$ is an interval $\subset \left(-\frac{1}{2}, \frac{1}{2}\right)$ ). The device may be configured to group the $N_{PS}$ first sequences into $N_G$ groups $\{\mathcal{P}_g\}_{g=1...N_G}$ $(N_G \leq N_{PS})$, each group containing up to $N_B$ sequences, each of which belonging to a distinct frequency band $\{\mathcal{B}_b\}_{b=1,...,N_B}$. The device may be configured to generate first pilot sequences using a same initial pilot value $p_{ini}$ or with different initial pilot values $p_{ini}$ for different first pilot sequences and using for each sequence an orthogonal projection matrix $P$ that is tailored to a target frequency band. The first pilot sequences may have a same length $N_p$ or different lengths depending on higher-layer requirements. $N_{p,max}$ is denoted as the maximum length among the $N_{PS}$ pilot sequences. The device may be configured to zero-pad first pilot sequences whose length is strictly smaller than $N_{p,max}$ to make their length equal to $N_{p,max}$. Among the obtained $N_{p,max}$-long first pilot sequences, the device may be configured to sum all sequences belonging to a same frequency band $\mathcal{P}_g$ (for $g \in \{1, ... , N_G\}$) to form one $N_{p,max}$-long sequence $p_g \triangleq \sum_{p \in \mathcal{P}_g} p$. The device may be configured to map each $p_g$ (for $g \in \{1, ... , N_G\}$) to a set $\mathcal{R}_g$ of contiguous inputs to the IDAFT modulation ($\mathcal{R}_g \subset \{0, ... , N_{DAFT} - 1\}$). The device may be configured to choose these sets such that $\mathcal{R}_{g_1} \cap \mathcal{R}_{g_2} = \emptyset$ for all $g_1 \neq g_2$, so that orthogonality is guaranteed for all the transmitted second pilot sequences generated based on the first pilot sequences.

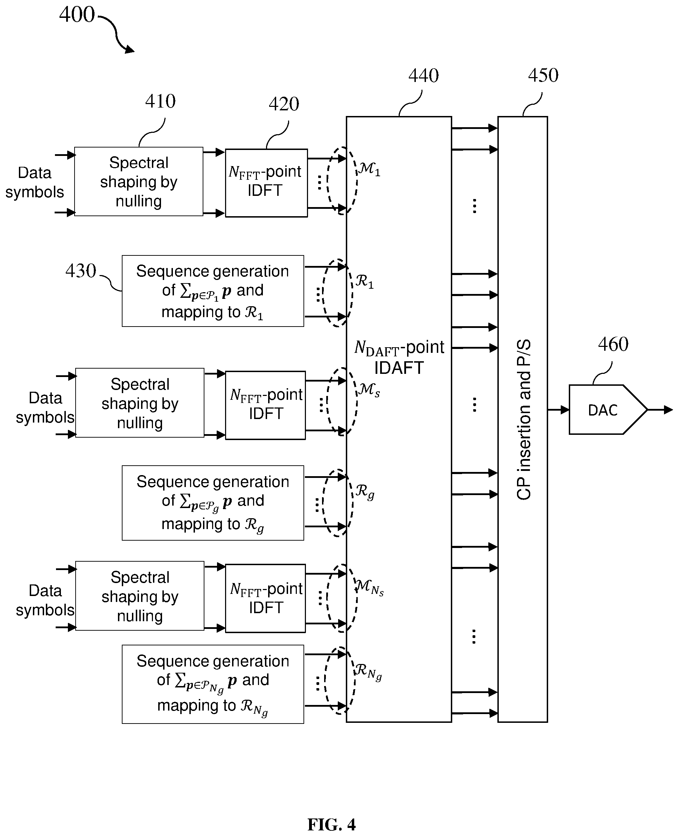

FIG. 4 shows an example of a transmitter 400 according to this disclosure. The transmitter 400 may be configured to generate an AFDM signal based on one or more sets of data symbols. The multiple sets of data symbols may be for multiple user terminals or multiple antennas of a terminal. The transmitter 400 may be the device 100. Alternatively, the device 100 may be part of the transmitter 400. For instance, the transmitter 400 may be a modulator within baseband circuitry of the transmitter. The transmitter could be a base station (or an access point) transmitting in a downlink of a wireless system, a user terminal transmitting in an uplink, or a user terminal transmitting to another user terminal in a sidelink.

The transmitter 400 may comprise at least one nulling module 410, at least one $N_{\text{FFT}}$-point IDFT module 420, at least one pilot sequence generation module 430, an $N_{\text{DAFT}}$-point IDAFT module 440, a cyclic prefix (CP) insertion and parallel-to-serial (P/S) module 450, and a DAC 460. The arrows connecting these modules represent signal flows. $N_{\text{FFT}}$ and $N_{\text{DAFT}}$ are both positive integers, and $N_{\text{FFT}} < N_{\text{DAFT}}$.

In FIG. 4, $N_{PS}$ first pilot sequences are generated by the pilot sequence generation module 430 and then mapped to $N_G$ non-overlapping subsets of inputs to the IDAFT module 440 of the transmitter. Each first pilot sequence is transformed into a corresponding second pilot sequence according to FIG. 1. For non-pilot data, e.g., data or control messaging symbols, they are first grouped into $N_s$ blocks or sub-symbols. The grouped symbols are pre-coded using the $N_{\text{FFT}}$-point IDFT module ($N_{\text{FFT}} < N_{\text{DAFT}}$). The output of an $s$-th IDFT module ($s \in \{1, ..., N_s\}$) is mapped to a set $\mathcal{M}_s$ of contiguous inputs to the IDAFT module 440 ($\mathcal{M}_s \subset \{0, ..., N_{\text{DAFT}} - 1\}$). The sets $\mathcal{M}$ are chosen such that $\mathcal{M}_{s_1} \cap \mathcal{M}_{s_2} = \varnothing$ for all $s_1 \neq s_2$ and such that $\mathcal{M}_s \cap \mathcal{R}_g = \varnothing$ for all $s \in \{1, ..., N_S\}$ and $g \in \{1, ..., N_G\}$. That is, data symbols and pilot sequences are mapped to non-overlapping inputs of the IDAFT module. Spectral shaping of the data symbols is performed by the nulling module 410. The nulling module 410 is adapted to set specific inputs of the IDFT module to zero (nulling). In this way, the time-domain samples of the data symbols can be bandwidth limited to a target frequency range $\left( v_c - \frac{w}{2}, v_c + \frac{w}{2} \right)$ (in digital frequencies). The nulled inputs are those among the $N_{\text{FFT}}$ inputs which correspond to digital frequencies outside the band $\left( v_c - \frac{w}{2}, v_c + \frac{w}{2} \right)$.

In the following, an example is given to check whether an input $k \in \{0, ..., N_{\text{FFT}} - 1\}$ belongs to the target frequency range or not. Compute $v_k$ defined as

$$v_k = \begin{cases} \dfrac{k}{N_{\text{FFT}}}, \text{if } \dfrac{k}{N_{\text{FFT}}} < \dfrac{1}{2} \\ \dfrac{k}{N_{\text{FFT}}} - 1, \text{otherwise} \end{cases} \qquad (12).$$

By doing so, the IDFT module 440 can produce a time-domain signal that has most of its power inside the digital frequency range $\left( v_c + -\frac{w}{2}, v_c + \frac{w}{2} \right)$.

The values of $v_c$ and $W$ for each transmission are chosen such that $\left( v_c - \frac{w}{2}, v_c + \frac{w}{2} \right) \subset \left( -\frac{W_{\text{sys}}}{2}, \frac{W_{\text{sys}}}{2} \right)$, where $W_{\text{sys}} \times \frac{1}{T_s}$ is the target bandwidth in Hz of the whole system and $T_s$ is the sample period of the DAC 460. Each non-nulled input to any one of the $N_{\text{FFT}}$-point IDFT module 440 corresponding to the digital frequency band $\left( -\frac{W_{\text{sys}}}{2}, \frac{W_{\text{sys}}}{2} \right)$. That is, each value $k \in \{0, ..., N_{\text{FFT}} - 1\}$, which satisfies $v_k \in \left( -\frac{W_{\text{sys}}}{2}, \frac{W_{\text{sys}}}{2} \right)$ where $v_k$ is defined above, defines a resource element for data or control messaging transmission in AFDM. Resource elements at the input to the same $N_{\text{FFT}}$-point IDFT module can be grouped to form AFDM physical resource blocks (PRB), each of which consists of a pre-defined number $N_{\text{RE}}^{\text{RB}}$ of contiguous resource elements. For example, $N_{\text{RE}}^{\text{RB}}$ is equal to 12 in 4G (e.g., LTE) and 5G (e.g., NR) systems. These resource blocks can be used as building blocks for physical transmission channels which can serve the same role as the physical downlink shared channel (PDSCH), the physical downlink control channel (PDCCH), the physical uplink shared channel (PUSCH), the physical uplink control channel (PUCCH), the physical sidelink shared channel (PSSCH) and the physical sidelink control channel (PSCCH) in 3GPP standards related to LTE and 5G NR.

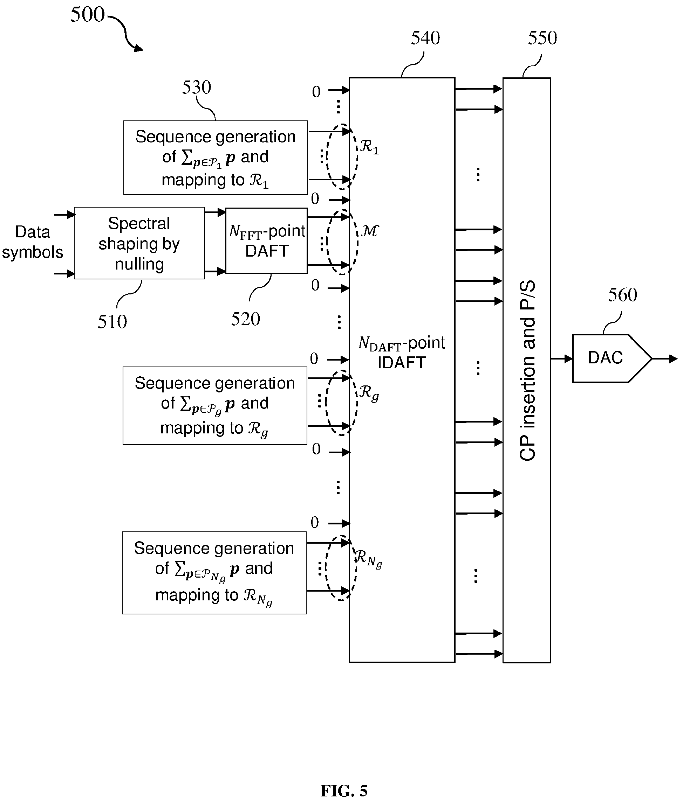

FIG. 5 shows a further example of a transmitter 500 according to this disclosure. Similar to the DFT-spread OFDM technique, the transmitter 500 may be configured to generate a DAFT-spread AFDM signal based on one set of data symbols. The transmitter 500 may be the device 100, or the device 100 may be part of the transmitter 500. For instance, the transmitter 500 may be a modulator within baseband circuitry of the transmitter. The transmitter could be a base station (or an access point) transmitting in a downlink of a wireless system, a user terminal transmitting in an uplink, or a user terminal transmitting to another user terminal in a sidelink.

The transmitter 500 may comprise one nulling module 510, one $N_{FFT}$-point DAFT module 520, at least one pilot sequence generation module 530, an $N_{DAFT}$-point IDAFT module 540, a CP insertion and P/S module 550, and a DAC 560. The arrows connecting these modules represent signal flows. $N_{FFT}$ and $N_{DAFT}$ are both positive integers, and $N_{FFT} < N_{DAFT}$.

In FIG. 5, $N_{PS}$ first pilot sequences are generated by the pilot sequence generation module 530 and are mapped to $N_g$ non-overlapping subsets of inputs to the IDAFT module 540 for transmission in the form of the second pilot sequence. As for non-pilot data, e.g., data or control messaging symbols, they are first pre-coded using the $N_{FFT}$-point DAFT module 520 ($N_{FFT} < N_{DAFT}$). The output of the DAFT module 520 is then mapped to a set of $\mathcal{M}$ contiguous inputs to the $N_{DAFT}$-point IDAFT module 540 ($\mathcal{M} \subset \{0, ..., N_{DAFT} - 1\}$). This set is chosen such that $\mathcal{M} \cap \mathcal{R}_g = \emptyset$ for all $g \in \{1, ..., N_G\}$ and $\mathcal{M} \cap \mathcal{N} = \emptyset$ for any $\mathcal{N} \subset \{0, ..., N_{DAFT} - 1\}$ that is assigned to a concurrent transmission out of the set of inputs to the $N_{DAFT}$-point IDAFT module 540. Spectral shaping of the data symbols is performed by the nulling module 410. The nulling module 410 is adapted to set specific inputs of the IDFT module to zero (nulling). In this way, the time-domain samples of the data symbols can be bandwidth limited to a target frequency range $\left(v_c - \frac{w}{2}, v_c + \frac{w}{2}\right)$ (in digital frequencies).

When $\mathcal{M} = \{0, ..., N_{FFT} - 1\}$ and when the samples at the input to the $N_{FFT}$-point DAFT module are $\{s_n\}_{n=0...N_{FFT}-1}$, then the time-domain samples of the DAFT-s-AFDM signal are

$$x_k = e^{j2\pi ck^2} \sum_{n=0}^{N_{FFT}-1} e^{-j2\pi cn^2} s_n\, g_{(k-Pn)_{N_{DAFT}}}, k = 0, ..., N_{DAFT} - 1,$$

$$\text{where } c = \mp\frac{1}{2N_{DAFT}}, g_k \triangleq e^{j\pi\left(1-\frac{1}{N_{FFT}}\right)\frac{kN_{FFT}}{N_{DAFT}}} \frac{\sin \pi \dfrac{kN_{FFT}}{N_{DAFT}}}{N \sin \pi \dfrac{k}{N_{DAFT}}}. \qquad (13)$$

In Equation 13, $g_k$ denotes a Dirichlet pulse, and the notation $(X)_{N_{DAFT}}$ denotes a modulo operation, i.e., $X \bmod N_{DAFT}$. Due to the time domain chirping (the multiplicative term $e^{j2\pi ck^2}$ in Equation 13), each one of the $N_{FFT}$ Dirichlet pulses in the sum occupy a portion of a total bandwidth that is shifted with an amount equal to $\frac{1}{N_{FFT}}$ of the total bandwidth with respect to the band occupied by its two neighbouring pulses in the sum. The total bandwidth is equal to the sample rate of the DAC 460. This means that there is a bandwidth overlapping between the bands of two successive Dirichlet pulses in the sum and that the non-overlapping part is equal to $\frac{1}{N_{FFT}}$ of the total bandwidth. Therefore, spectral shaping of the data part of the DAFT-s-AFDM signal i.e., making the time-domain samples of the data part of the signal band-limited to a frequency range $\left(v_c - \frac{w}{2}, v_c + \frac{w}{2}\right)$ (in digital frequencies), can be done by nulling specific pulses in the sum, e.g., by setting specific symbols of the samples sequence $\{s_n\}_{n=0...N_{FFT}-1}$ to zero at the input of the $N_{FFT}$-point DAFT module 520. Since the bands of two neighbouring pulses are shifted by an amount equal to $\frac{1}{N_{FFT}}$ of the total bandwidth, the number of the nulled inputs should be approximately equal to $\lceil(1 - W)N_{FFT}\rceil$ where $\lceil a \rceil$ stands for the closest integer number larger than $a$ ($a$ is a real number). In the following, it is disclosed how to determine the specific inputs to be nulled. Firstly, the notation of $v_c^{out} \in \left(-\frac{1}{2}, \frac{1}{2}\right)$ is given to designate the center frequency $v_c^{out}$ of the frequency band $\left(-\frac{1}{2}, \frac{1}{2}\right) \setminus \left(v_c - \frac{w}{2}, v_c + \frac{w}{2}\right)$ where notation "\" stands for the set difference operator. More precisely,

$$v_{c,l} = \min\left(\left(v_c - \frac{w}{2}\right)_1, \left(v_c + \frac{w}{2}\right)_1\right),$$

$$v_{c,r} = \max\left(\left(v_c - \frac{W}{2}\right)_1, \left(v_c + \frac{W}{2}\right)_1\right) \qquad (14)$$

are defined.

In Equation 14, the notation $(X)_1$ stands for the analog modulo operation with respect to 1. The center frequency $v_c^{out}$ of the band to be nulled can now be defined as follows:

$$v_c^{\text{out}} = \begin{cases} \frac{v_{c,l}+v_{c,r}}{2}, \text{if } \frac{v_{c,l}+v_{c,r}}{2} < \frac{1}{2} \\ \frac{v_{c,l}+v_{c,r}}{2} - 1, \text{otherwise} \end{cases} \qquad (15).$$

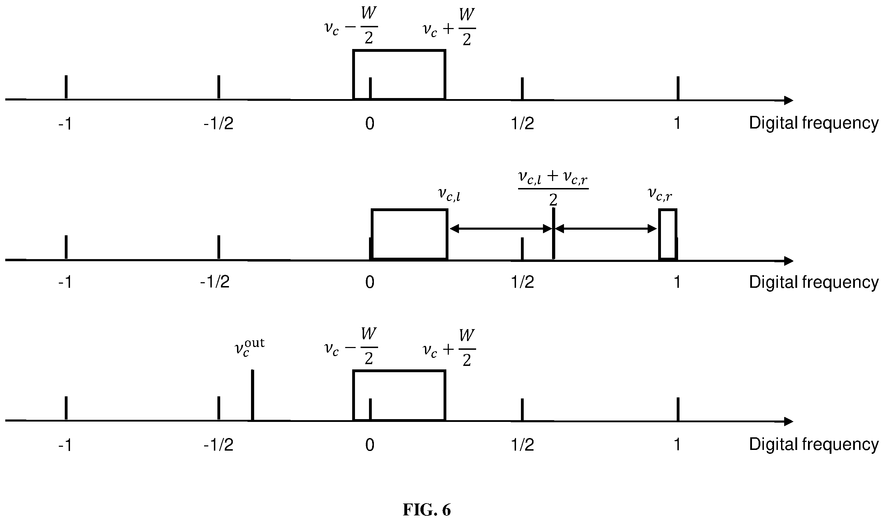

FIG. 6 illustrates an example for computing a center frequency of a band to be nulled.

Finding the specific inputs to be nulled can be performed as follows:

1. Find the input index $n_0 \in \{0, ..., N_{FFT} - 1\}$ corresponding to the chirped pulse $\{e^{j2\pi ck^2}g_{(k-Pn_0)N_{DAFT}}\}_{k=0...N_{DAFT}-1}$ satisfying that its spectrum is centered around a frequency that is the closest among all the chirped pulses $\{e^{j2\pi ck^2}g_{(k-Pn)N_{DAFT}}\}_{k=0...N_{DAFT}-1}$ for $n = 0 ... N_{FFT} - 1$, to the frequency $v_c^{\text{out}}$

2. Set $s_n = 0$ for every $n = (n_0 + m)_{N_{FFT}}$ for $m = 0,1,..., \left\lceil \frac{(1-W)N_{FFT}}{2} \right\rceil$

3. Set $s_n = 0$ for every $n = (n_0 - m)_{N_{FFT}}$ for $m = 1,..., \left\lceil \frac{(1-W)N_{FFT}}{2} \right\rceil$.

Similar to the AFDM in FIG. 5, the system target bandwidth for the DAFT-s-AFDM system in digital frequencies can be designated as $W_{sys}$ and in Hz as $W_{sys} \times \frac{1}{T_s}$. A setting of the DAFT-s-AFDM system is when all the concurrent transmissions are assigned the frequency band $\left(-\frac{W_{sys}}{2}, \frac{W_{sys}}{2}\right)$ i.e., $W = W_{sys}$ and $v_c = 0$, with possibly different values for the precoding module size, $N_{FFT}$, for different concurrent transmissions. In this case, the number of non-nulled inputs to the precoding module of a user with a $N_{FFT}$-point DAFT precoder is approximately $W_{sys}N_{FFT}$. Each non-nulled input to any one of the DAFT modules 520 defines a resource element for data or control messaging transmission in DAFT-s-AFDM. Resource elements at the input to the same DAFT module 520 can be grouped to form DAFT-s-AFDM PRBs. Each PRB comprises a pre-defined number of contiguous resource elements. For instance, $N_{RE}^{RB} = 12$ in 4G (LTE) and 5G (NR) systems. These PRBs can be used as the building blocks for physical transmission channels which can serve the same role as the PUSCH, PUCCH, PSSCH, and PSCCH in LTE and NR related standards.

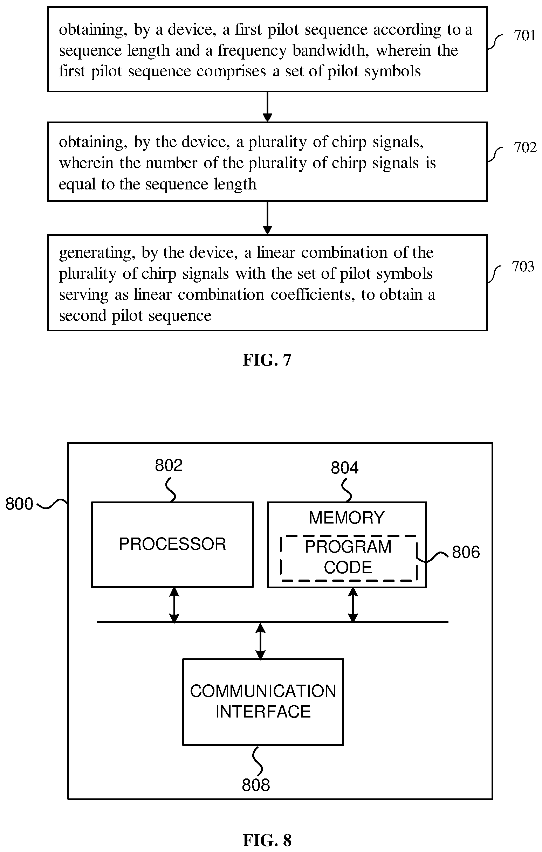

FIG. 7 shows a diagram of a method 700 for generating a signal according to this disclosure. The method 700 comprises the following steps:

- Step 701: obtaining, by a device, a first pilot sequence according to a sequence length and a frequency bandwidth, wherein the first pilot sequence comprises a set of pilot symbols;
- Step 702: obtaining, by the device, a plurality of chirp signals, wherein the number of the plurality of chirp signals is equal to the sequence length; and
- Step 703: generating, by the device, a linear combination of the plurality of chirp signals with the set of pilot symbols serving as linear combination coefficients, to obtain a second pilot sequence.

The steps of the method 700 may share the same functions and details from the perspective of FIG. 1-6 described above. Therefore, the corresponding method implementations are not described again at this point.

FIG. 8 shows an example of a device 800 according to this disclosure. The device 800 may be a computer-implemented device adapted to generate a signal according to this disclosure. The device 800 may comprise at least one processor 802. The at least one processor 202 may comprise, for example, one or more of various processing units, such as a processing core, a microprocessor, a controller, a digital signal processor (DSP), a processing circuitry with or without an accompanying DSP, or other processing devices including integrated circuits such as an application specific integrated circuit (ASIC), a field programmable gate array (FPGA), a microcontroller unit (MCU), a hardware accelerator, a special-purpose computer chip, or the like.

The device 800 may further comprise at least one memory 804. The memory 804 may be configured to store a computer program code 806 or the like. The memory 204 may comprise one or more volatile memory devices, one or more non-volatile memory devices, and/or a combination thereof. For example, the memory may be embodied as magnetic storage devices (such as hard disk drives, solid state drives, magnetic tapes, etc.), optical magnetic storage devices, or semiconductor memories (such as mask ROM, PROM (programmable ROM), EPROM (erasable PROM), flash ROM, RAM (random access memory), etc.). When the computer program code 806 is executed by the at least one processor 802, the device 800 is adapted to generate a signal as described with respect to FIG. 1-7.

The device 800 may further comprise communication interface 808 configured to enable the device 800 to transmit and/or receive a signal. The communication interface 808 may comprise an internal communication interface such as an interface between baseband circuitry and radio frequency (RF) circuitry of a transmitter or a transceiver device.

Alternatively, or additionally, the communication interface 808 may be configured to provide at least one external wireless radio connection, such as a 3GPP mobile broadband connection (e.g. 3G, 4G, 5G and 6G); a wireless local area network (WLAN) connection which is standardized by IEEE 802.11 series or Wi-Fi alliance; a short-range wireless network connection such as a Bluetooth connection. The communication interface 808 may hence comprise one or more antennas to enable transmission and/or reception of radio frequency signals over the air.

The device 800 may comprise, for instance, a modulator chip, a demodulator chip, a baseband chip, a mobile phone, a tablet, a laptop, an internet-of-things device, a base station, or the like. Although the device 800 is illustrated as a single device, it is appreciated that, wherever applicable, functions of the device 800 may be distributed to a plurality of devices, for example, between components of a transmitter or a transceiver.

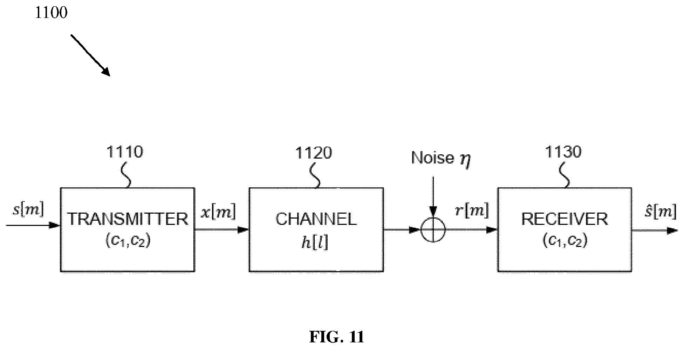

FIG. 11 shows an example of a communication system 1100 according to this disclosure. The communication system 1100 may comprise at least one transmitter 1110 and at least one receiver 1130. The transmitter 1110 and the receiver 1130 communicate via a transmission channel 1120. The transmitter 1110 generates a transmitted signal $x[m]$ based on a set of input symbols $s[m]$. The transmitter 1110 may generate a multi-chirp signal characterized by IDAFT coefficients, $(c_1, c_2)$, that can be set with respect to some performance criterion. The coefficients, $(c_1, c_2)$, may be generally understood as IDAFT (or DAFT) parameters. For example, these coefficients may be selected such that a frequency sweep range of each chirp signal is large enough to provide sufficient frequency diversity and such that performance degradation due to Doppler spread is mitigated.

The transmitted signal $x[m]$ is fed through the transmission channel 1120, which may be modeled by an impulse response, $h[l]$. The impulse response, $h[l]$, may comprise $L$ paths, $l \in \{1, ..., L\}$. Each of the $L$ paths may be associated with a delay, $\tau_l$, and a Doppler frequency shift, $v_l$.-Doppler profile of the transmission channel 1120 may comprise the delays and Doppler shifts of the different paths of the channel impulse response, $h[l]$. Noise may be modeled by adding additive white Gaussian noise, $\eta$, after the transmission channel 1120. The receiver 1130 may determine estimates of the input symbols, $\hat{s}[m]$, based on a received signal, $r[m]$.

A discrete-time waveform of an AFDM signal may be expressed as:

$$x[n] = \sum_{m=0}^{N-1} s[m]w[m,n] \qquad (16)$$

for n = 0,1, ..., $N$ - 1, where the input symbols, $s[m]$, are taken from a set of (real or complex-valued) input symbols, and where $N$ is a maximum number of chirp signals, for example, an upper limit for modulated orthogonal chirp signals. The chirp signals, $w[m, n]$, may comprise or be based on a term $e^{-j\frac{2\pi}{N}p(m,n)}$, where $\cdot j = \sqrt{-1}$ and wherein $e$ is the Euler's number $e \approx 2.71828$. The chirp signals may be characterized by a bivariate polynomial, $p(m, n)$, of input symbol index $m$ and chirp signal time index $n$. Polynomial $p(m, n)$ may comprise a bivariate quadratic polynomial, i.e., a bivariate polynomial of a second degree. The time-discrete signal $x[n]$ may be obtained by sampling a corresponding time-continuous signal $x(t) = \sum_{m=0}^{N-1} s[m]w(m,t)$ defined for $0 \leq t \leq T$ at $t = \frac{nT}{N}$ for $n = 0,1, ...,N$ - 1.

An AFDM signal may be for example expressed by basis functions of the form

$$w[m,n] = \frac{1}{\sqrt{N}} e^{-j\frac{2\pi}{N}p(m,n)}. \qquad (17)$$

Hence, the bivariate polynomial $p(m, n)$ may be applied at the exponent term of a complex exponential function. It is however noted that any other suitable factor may be used instead or in addition to normalization factor $\frac{1}{\sqrt{N}}$.

In general, a bivariate polynomial may be expressed as $f(x, y) = a_1x^2 + a_2y^2 + a_3xy + a_4x + a_5y + a_6$, where $a_1$ to $a_6$ are the coefficients of the different terms of the polynomial. A degree of a term may be defined as the sum of exponents of the term. Hence, the bivariate quadratic polynomial $f(x,y) = a_1x^2 + a_2y^2 + a_3xy + a_4x + a_5y + a_6$ comprises three second degree coefficients $a_1$ to $a_3$, two first degree coefficients $a_4$ and $a_5$, and one zeroth degree coefficient $a_6$, i.e., a scalar term. A quadratic term may refer to a term that is raised to the second power. Hence, the above bivariate quadratic polynomial comprises a first quadratic term $a_1x^2$ of variable $x$ with coefficient $a_1$, and a second quadratic term $a_2y^2$ of variable $y$ with coefficient $a_2$. A bivariate polynomial is a bivariate quadratic polynomial if at least one coefficient of at least one of the quadratic terms of the polynomial is non-zero.

The bivariate polynomial, $p(m, n)$, characterizing the chirp signals, $w[m, n]$, may comprise $p(m,n) = c_1 n^2 + c_2 m^2 + \frac{nm}{N}$. By proper selection of the first coefficient $c_1$ and the second coefficient $c_2$, tolerance of the generated AFDM waveform to impairments in doubly dispersive i.e., time-varying, channels may be improved.

In this disclosure, the transmitter 1110 is further configured to generate a signal according to FIG. 1-7 as mentioned above. For example, the second pilot sequence and data symbols generated according to this disclosure may be mixed and transmitted together as the transmitted signal $x[m]$ in FIG. 11. The second pilot sequence is used by the receiver 1130 to estimate the channel impulse response, $h[l]$. Then, the receiver decodes (or estimates) the input symbols $\hat{s}[m]$ based on the estimated channel impulse response.

The bandwidth of the signals generated according to this disclosure can be easily controlled by changing a few parameters, namely, the number of nulled sub-carriers for data or control messaging and parameters $N_p$ and $W$ for generating an orthogonal projection pilot sequence, i.e., the first pilot sequence.

For decoding the signals generated according to this disclosure, only low-complexity changes may be needed at the receiver 1130. For instance, the receiver 1130 may be adapted to discard samples received at the null sub-carriers positions when detecting data without spectral shaping.

Contrary to conventionally using an individual chirp signal for transmitting a pilot sequence, this disclosure uses pilot symbols of a pilot sequence to linearly combine multiple chirp signals. The resulted second pilot sequence is bandwidth controllable and does not span the whole bandwidth.

Generally, this disclosure relates to pilot sequence generation in the DAFT domain using orthogonal projections (e.g., on the span of a subset of the DFT or of the Slepian basis) to generate pilot signals that can be spectrally shaped to fit a target spectral occupancy equal to W<1 in digital frequencies while having finite support of a length $N_p$ that is much smaller than the DAFT domain size. That is, the second pilot sequence generated in this disclosure can be seen as spectrally shaped chirp-based pilot signals. When multiple second pilot sequences are generated, these multiple second pilot sequences are respectively spectrally shaped and are orthogonal with each other. The pilot sequences generated in the DAFT domain are mapped to certain inputs of the IDAFT module of a transmitter for transmission. For example, symbols belonging to different pilot sequences with non-overlapping supports in the frequency domain may be mapped to the same input of the IDAFT module. Pilot sequences with partially or fully overlapping supports in the frequency domain may be mapped to distinct inputs of the IDAFT module to guarantee orthogonality. The pilot sequences generated in the DAFT domain may be further multiplexed with data symbols as inputs to the IDAFT module for transmission. To ensure that both data (e.g., user data or control data) comprising the data symbols and pilot signals have a target spectral occupancy, one possible way is to pre-code the data symbols with an IDFT module where specific inputs of the IDFT module are set to zero. Another possible way is to pre-code the data symbols with a DAFT module where specific inputs of the DAFT module are set to zero. Each non-nulled input to any one of the IDFT module and the DAFT module defines a resource element for data transmission. Resource elements from the same IDFT module or the same DAFT module are grouped to form PRBs, each of the PRBs comprising a pre-defined number of contiguous resource elements.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other units may fulfill the functions of several entities or items recited in the claims. The mere fact that certain measures are recited in the mutual different dependent claims does not indicate that a combination of these measures cannot be used in an advantageous implementation.

**Claims**

1. A device (100) for generating a signal, wherein the device (100) is configured to:

   obtain a first pilot sequence (110) according to a sequence length and a frequency bandwidth, wherein the first pilot sequence (110) comprises a set of pilot symbols, and the first pilot sequence (110) is spectrally shaped;
   obtain a plurality of chirp signals (130, 150), wherein the number of the plurality of chirp signals (130, 150) is equal to the sequence length; and
   generate a linear combination of the plurality of chirp signals (130, 150) with the set of pilot symbols serving as linear combination coefficients, to obtain a second pilot sequence (120).

2. The device (100) according to claim 1, wherein for generating the linear combination of the plurality of chirp signals (130, 150), the device (100) is configured to map the first pilot sequence (110) to a consecutive input of an inverse discrete affine Fourier transformation, IDAFT, modulation.

3. The device (100) according to claim 1 or 2, wherein, before generating the linear combination of the plurality of chirp signals (130, 150), the device (100) is configured to:
   shift the first pilot sequence (110) in a frequency domain, by elementwise multiplying the first pilot sequence (110) with a frequency shifting vector according to a frequency value.

4. The device (100) according to any one of claims 1 to 3, wherein the device (100) is configured to obtain the first pilot sequence (110) through a pre-defined lookup table by using the sequence length and the frequency bandwidth as indexes.

5. The device (100) according to any one of claims 1 to 3, wherein the device (100) is configured to obtain the first pilot sequence (110) by:

   obtaining an initial sequence according to the sequence length;
   obtaining a plurality of projection sequences, wherein each of the plurality of projection sequences has the same sequence length of the initial sequence and is bandwidth limited to the frequency bandwidth; and
   generating an orthogonal projection of the initial sequence onto the span of the plurality of projection sequences, by left multiplying the initial sequence with a projection matrix $PP^H$, to obtain the first pilot sequence (110), wherein columns of matrix $P$ are the plurality of projection sequences.

6. The device (100) according to claim 5, wherein for obtaining the initial sequence, the device is configured to generate the initial sequence based on a cell identity and/or a scrambling sequence.

7. The device (100) according to claim 5 or 6, wherein the plurality of projection sequences comprise discrete prolate spheroidal sequences corresponding to the sequence length and the frequency bandwidth.

8. The device (100) according to claim 5 or 6, wherein the plurality of projection sequences comprise columns of a discrete Fourier transform matrix corresponding to the sequence length and the frequency bandwidth.

9. The device (100) according to any one of claims 1 to 8, wherein the device (100) is further configured to:

   obtain a plurality of the first pilot sequences that are bandwidth-limited to non-overlapping frequency bands; and
   provide the plurality of first pilot sequences as a same input or overlapping inputs for IDAFT modulation.

10. The device (100) according to any one of claims 1 to 9, wherein the device is further configured to:

   obtain a plurality of the first pilot sequences that are bandwidth-limited to overlapping frequency bands; and
   provide the plurality of the first pilot sequences as non-overlapping inputs for IDAFT modulation.

11. The device (100) according to any one of claims 1 to 10, wherein the device is further configured to:

   obtain a set of data symbols;
   provide the set of data symbols as an input of an $N_{FFT}$-point inverse discrete Fourier transformation, IDFT;
   set one or more data symbols of the input of the $N_{FFT}$-point IDFT to zero and obtain an output of the $N_{FFT}$-point IDFT; and
   provide an aggregation of the output of the $N_{FFT}$-point IDFT and the first pilot sequence (110) as an input of an $N_{DAFT}$-point IDAFT, to obtain an output of the $N_{DAFT}$-point IDAFT, wherein $N_{FFT}$ is less than $N_{DAFT}$.

12. The device (100) according to any one of claims 1 to 10, wherein the device is an $N_{DAFT}$-point discrete affine Fourier transform-spread affine frequency division multiplexing, DAFT-s-AFDM, transmitter, and the transmitter is further configured to:

   obtain a set of data symbols;
   provide the set of data symbols as an input of an $N_{FFT}$-point DAFT;
   set one or more data symbols of the input of the $N_{FFT}$-point DAFT to zero and obtain an output of the $N_{FFT}$-point DAFT; and
   provide an aggregation of the output of the $N_{FFT}$-point DAFT and the first pilot sequence (110) as an input of an $N_{DAFT}$-point IDAFT, to obtain an output of the $N_{DAFT}$-point IDAFT, wherein $N_{FFT}$ is less than $N_{DAFT}$.

13. The device (100) according to any one of claims 1 to 12, wherein the first pilot sequence (110) is a downlink demodulation reference signal or a channel state information reference signal.

**14.** A method (700) for generating a signal, comprising:

obtaining (701), by a device, a first pilot sequence according to a sequence length and a frequency bandwidth, wherein the first pilot sequence comprises a set of pilot symbols, and the first pilot sequence is spectrally shaped; obtaining (702), by the device, a plurality of chirp signals, wherein the number of the plurality of chirp signals is equal to the sequence length; and generating (703), by the device, a linear combination of the plurality of chirp signals with the set of pilot symbols serving as linear combination coefficients, to obtain a second pilot sequence.

**15.** A computer program product comprising instructions which, when the program is executed by a computer, cause the computer to perform the method (700) according to claim 14.

**Patentansprüche**

**1.** Vorrichtung (100) zum Erzeugen eines Signals, wobei die Vorrichtung (100) zu Folgendem konfiguriert ist:

Erhalten einer ersten Pilotsequenz (110) gemäß einer Sequenzlänge und einer Frequenzbandbreite, wobei die erste Pilotsequenz (110) eine Menge an Pilotsymbolen umfasst und die erste Pilotsequenz (110) spektral geformt ist; Erhalten einer Vielzahl von Chirp-Signalen (130, 150), wobei die Anzahl der Vielzahl von Chirp-Signalen (130, 150) gleich der Sequenzlänge ist; und Erzeugen einer Linearkombination der Vielzahl von Chirp-Signalen (130, 150), wobei die Menge an Pilotsymbolen als Linearkombinationskoeffizienten dient, um eine zweite Pilotsequenz (120) zu erhalten.

**2.** Vorrichtung (100) nach Anspruch 1, wobei zum Erzeugen der Linearkombination der Vielzahl von Chirp-Signalen (130, 150) die Vorrichtung (100) dazu konfiguriert ist, die erste Pilotsequenz (110) auf eine konsekutive Eingabe einer inversen diskreten affinen Fourier-Transformation, IDAFT, abzubilden.

**3.** Vorrichtung (100) nach Anspruch 1 oder 2, wobei die Vorrichtung (100) vor dem Erzeugen der Linearkombination der Vielzahl von Chirp-Signalen (130, 150) zu Folgendem konfiguriert ist: Verschieben der ersten Pilotsequenz (110) in einem Frequenzbereich durch elementweises Multiplizieren der ersten Pilotsequenz (110) mit einem Frequenzverschiebungsvektor gemäß einem Frequenzwert.

**4.** Vorrichtung (100) nach einem der Ansprüche 1 bis 3, wobei die Vorrichtung (100) dazu konfiguriert ist, die erste Pilotsequenz (110) durch eine vordefinierte Lookup-Tabelle unter Verwendung der Sequenzlänge und der Frequenzbandbreite als Indizes zu erhalten.

**5.** Vorrichtung (100) nach einem der Ansprüche 1 bis 3, wobei die Vorrichtung (100) dazu konfiguriert ist, die erste Pilotsequenz (110) durch Folgendes zu erhalten:

Erhalten einer Anfangssequenz gemäß der Sequenzlänge; Erhalten einer Vielzahl von Projektionssequenzen, wobei jede der Vielzahl von Projektionssequenzen die gleiche Sequenzlänge wie die Anfangssequenz hat und auf die Frequenzbandbreite bandbreitenbegrenzt ist; und Erzeugen einer orthogonalen Projektion der Anfangssequenz auf den Spann der Vielzahl von Projektionssequenzen durch Multiplizieren von links der Anfangssequenz mit einer Projektionsmatrix $PP^H$, um die erste Pilotsequenz (110) zu erhalten, wobei Spalten der Matrix $P$ die Vielzahl von Projektionssequenzen sind.

**6.** Vorrichtung (100) nach Anspruch 5, wobei die Vorrichtung zum Erhalten der Anfangssequenz dazu konfiguriert ist, die Anfangssequenz basierend auf einer Zellidentität und/oder einer Verwürfelungssequenz zu erzeugen.

**7.** Vorrichtung (100) nach Anspruch 5 oder 6, wobei die Vielzahl von Projektionssequenzen diskrete verlängerte sphäroidale Sequenzen umfasst, die der Sequenzlänge und der Frequenzbandbreite entsprechen.

**8.** Vorrichtung (100) nach Anspruch 5 oder 6, wobei die Vielzahl von Projektionssequenzen Spalten einer diskreten Fourier-Transformationsmatrix umfasst, die der Sequenzlänge und der Frequenzbandbreite entsprechen.

**9.** Vorrichtung (100) nach einem der Ansprüche 1 bis 8, wobei die Vorrichtung (100) ferner zu Folgendem konfiguriert ist:

Erhalten einer Vielzahl der ersten Pilotsequenzen, die auf nicht überlappende Frequenzbänder bandbreitenbegrenzt sind; und

Bereitstellen der Vielzahl von ersten Pilotsequenzen als gleiche Eingabe oder überlappende Eingaben für die IDAFT-Modulation.

**10.** Vorrichtung (100) nach einem der Ansprüche 1 bis 9, wobei die Vorrichtung ferner zu Folgendem konfiguriert ist:

Erhalten einer Vielzahl der ersten Pilotsequenzen, die auf überlappende Frequenzbänder bandbreitenbegrenzt sind; und

Bereitstellen der Vielzahl der ersten Pilotsequenzen als nicht überlappende Eingaben für die IDAFT-Modulation.

**11.** Vorrichtung (100) nach einem der Ansprüche 1 bis 10, wobei die Vorrichtung ferner zu Folgendem konfiguriert ist:

Erhalten einer Menge von Datensymbolen;

Bereitstellen der Menge von Datensymbolen als eine Eingabe einer $N_{FFT}$-Punkt- inversen diskreten Fourier-Transformation, IDFT;

Setzen eines oder mehrerer Datensymbole der Eingabe der $N_{FFT}$-Punkt-IDFT auf null und Erhalten einer Ausgabe der $N_{FFT}$-Punkt-IDFT; und

Bereitstellen einer Aggregation der Ausgabe der $N_{FFT}$-Punkt-IDFT und der ersten Pilotsequenz (110) als eine Eingabe eines $N_{DAFT}$-Punkt-IDAFT, um eine Ausgabe der $N_{DAFT}$-Punkt-IDAFT zu erhalten, wobei $N_{FFT}$ kleiner als $N_{DAFT}$ ist.

**12.** Vorrichtung (100) nach einem der Ansprüche 1 bis 10, wobei die Vorrichtung ein Sender eines durch $N_{DAFT}$-Punkt-diskrete affine Fourier-Transformation gespreizten affinen Frequenzmultiplexverfahrens, DAFT-s-AFDM, ist und der Sender zu Folgendem konfiguriert ist:

Erhalten einer Menge von Datensymbolen;

Bereitstellen der Menge von Datensymbolen als eine Eingabe einer $N_{FFT}$-Punkt-DAFT;

Setzen eines oder mehrerer Datensymbole der Eingabe der $N_{FFT}$-Punkt-DAFT auf null und Erhalten einer Ausgabe der $N_{FFT}$-Punkt-DAFT; und

Bereitstellen einer Aggregation der Ausgabe der $N_{FFT}$-Punkt-DAFT und der ersten Pilotsequenz (110) als eine Eingabe eines $N_{DAFT}$-Punkt-IDAFT, um eine Ausgabe der $N_{DAFT}$-Punkt-IDAFT zu erhalten, wobei $N_{FFT}$ kleiner als $N_{DAFT}$ ist.

**13.** Vorrichtung (100) nach einem der Ansprüche 1 bis 12, wobei die erste Pilotsequenz (110) ein Downlink-Demodulationsreferenzsignal oder ein Kanalzustandsinformationsreferenzsignal ist.

**14.** Verfahren (700) zum Erzeugen eines Signals, umfassend:

Erhalten (701), durch eine Vorrichtung, einer ersten Pilotsequenz gemäß einer Sequenzlänge und einer Frequenzbandbreite, wobei die erste Pilotsequenz eine Menge an Pilotsymbolen umfasst und die erste Pilotsequenz spektral geformt ist;

Erhalten (702), durch die Vorrichtung, einer Vielzahl von Chirp-Signalen, wobei die Anzahl der Vielzahl von Chirp-Signalen gleich der Sequenzlänge ist; und

Erzeugen (703), durch die Vorrichtung, einer Linearkombination der Vielzahl von Chirp-Signalen, wobei die Menge an Pilotsymbolen als Linearkombinationskoeffizienten dient, um eine zweite Pilotsequenz zu erhalten.

**15.** Computerprogrammprodukt, umfassend Anweisungen, die, wenn das Programm durch einen Computer ausgeführt wird, den Computer dazu veranlassen, das Verfahren (700) nach Anspruch 14 durchzuführen.

**Revendications**

**1.** Dispositif (100) de génération d'un signal, dans lequel le dispositif (100) est configuré pour :

obtenir une première séquence pilote (110) selon une longueur de séquence et une bande passante de fréquence, dans lequel la première séquence pilote (110) comprend un ensemble de symboles pilotes, et la première séquence pilote (110) est spectralement mise en forme ;
obtenir une pluralité de signaux chirp (130, 150), dans lequel le nombre de la pluralité de signaux chirp (130, 150) est égal à la longueur de séquence ; et
générer une combinaison linéaire de la pluralité de signaux chirp (130, 150) avec l'ensemble de symboles pilotes servant de coefficients de combinaison linéaire, pour obtenir une seconde séquence pilote (120).

2. Dispositif (100) selon la revendication 1, dans lequel, pour générer la combinaison linéaire de la pluralité de signaux chirp (130, 150), le dispositif (100) est configuré pour mapper la première séquence pilote (110) à une entrée consécutive d'une modulation de transformation de Fourier affine discrète inverse, IDAFT.

3. Dispositif (100) selon la revendication 1 ou 2, dans lequel, avant de générer la combinaison linéaire de la pluralité de signaux chirp (130, 150), le dispositif (100) est configuré pour :
décaler la première séquence pilote (110) dans un domaine de fréquence, en multipliant élément par élément la première séquence pilote (110) avec un vecteur de décalage de fréquence selon une valeur de fréquence.

4. Dispositif (100) selon l'une quelconque des revendications 1 à 3, dans lequel le dispositif (100) est configuré pour obtenir la première séquence pilote (110) par le biais d'une table de consultation prédéfinie en utilisant la longueur de séquence et la bande passante de fréquence comme indices.

5. Dispositif (100) selon l'une quelconque des revendications 1 à 3, dans lequel le dispositif (100) est configuré pour obtenir la première séquence pilote (110) par :

l'obtention d'une séquence initiale selon la longueur de séquence ;
l'obtention d'une pluralité de séquences de projection, dans lequel chacune de la pluralité de séquences de projection a la même longueur de séquence que la séquence initiale et est une bande passante limitée à la bande passante de fréquence ; et
la génération d'une projection orthogonale de la séquence initiale sur l'étendue de la pluralité de séquences de projection, en multipliant à gauche la séquence initiale par une matrice de projection $PP^H$, pour obtenir la première séquence pilote (110), dans lequel des colonnes de matrice $P$ sont la pluralité de séquences de projection.

6. Dispositif (100) selon la revendication 5, dans lequel, pour obtenir la séquence initiale, le dispositif est configuré pour générer la séquence initiale sur la base d'une identité de cellule et/ou d'une séquence de brouillage.

7. Dispositif (100) selon la revendication 5 ou 6, dans lequel la pluralité de séquences de projection comprennent des séquences sphéroïdales prolates discrètes correspondant à la longueur de séquence et à la bande passante de fréquence.

8. Dispositif (100) selon la revendication 5 ou 6, dans lequel la pluralité de séquences de projection comprennent des colonnes d'une matrice de transformée de Fourier discrète correspondant à la longueur de séquence et à la bande passante de fréquence.

9. Dispositif (100) selon l'une quelconque des revendications 1 à 8, dans lequel le dispositif (100) est configuré en outre pour :

obtenir une pluralité de premières séquences pilotes dont la bande passante est limitée à des bandes de fréquences sans chevauchement ; et
fournir la pluralité de premières séquences pilotes sous forme d'une seule entrée ou d'entrées avec chevauchement pour la modulation IDAFT.

10. Dispositif (100) selon l'une quelconque des revendications 1 à 9, dans lequel le dispositif est configuré en outre pour :

obtenir une pluralité des premières séquences pilotes dont la bande passante est limitée à des bandes de fréquences avec chevauchement ; et
fournir la pluralité des premières séquences pilotes sous forme d'entrées sans chevauchement pour la modulation IDAFT.

**11.** Dispositif (100) selon l'une quelconque des revendications 1 à 10, dans lequel le dispositif est configuré en outre pour :

obtenir un ensemble de symboles de données ;

fournir l'ensemble de symboles de données comme entrée d'une transformation de Fourier discrète inverse, IDFT, à points $N_{FFT}$ ;

mettre à zéro un ou plusieurs symboles de données de l'entrée de l'IDFT à points $N_{FFT}$ et obtenir une sortie de l'IDFT à points $N_{FFT}$ ; et

fournir une agrégation de la sortie de l'IDFT à points $N_{FFT}$ et de la première séquence pilote (110) comme entrée d'une IDAFT à points $N_{DAFT}$, pour obtenir une sortie de l'IDAFT à points $N_{DAFT}$, où $N_{FFT}$ est inférieur à $N_{DAFT}$.

**12.** Dispositif (100) selon l'une quelconque des revendications 1 à 10, dans lequel le dispositif est un émetteur à multiplexage par répartition en fréquence affine à transformée de Fourier affine discrète, DAFT-s-AFDM, à points $N_{DAFT}$ et l'émetteur est en outre configuré pour :

obtenir un ensemble de symboles de données ;

fournir l'ensemble de symboles de données comme entrée d'une DAFT à points $N_{FFT}$ ;

mettre à zéro un ou plusieurs symboles de données de l'entrée de la DAFT à points $N_{FFT}$ et obtenir une sortie de la DAFT à points $N_{FFT}$ ; et

fournir une agrégation de la sortie de la DAFT à points $N_{FFT}$ et de la première séquence pilote (110) comme entrée d'une IDAFT à points $N_{DAFT}$, pour obtenir une sortie de l'IDAFT à points $N_{DAFT}$, où $N_{FFT}$ est inférieur à $N_{DAFT}$.

**13.** Dispositif (100) selon l'une quelconque des revendications 1 à 12, dans lequel la première séquence pilote (110) est un signal de référence de démodulation de liaison descendante ou un signal de référence d'informations d'état de canal.

**14.** Procédé (700) de génération d'un signal, comprenant :

l'obtention (701), par un dispositif, d'une première séquence pilote selon une longueur de séquence et une bande passante de fréquence, dans lequel la première séquence pilote comprend un ensemble de symboles pilotes, et la première séquence pilote est spectralement mise en forme ;

l'obtention (702), par le dispositif, d'une pluralité de signaux chirp, dans lequel le nombre de la pluralité de signaux chirp est égal à la longueur de séquence ; et

la génération (703), par le dispositif, d'une combinaison linéaire de la pluralité de signaux chirp avec l'ensemble de symboles pilotes servant de coefficients de combinaison linéaire, pour obtenir une seconde séquence pilote.

**15.** Produit de programme informatique comprenant des instructions qui, lorsque le programme est exécuté par un ordinateur, amènent l'ordinateur à réaliser le procédé (700) selon la revendication 14.

**FIG. 1**

FIG. 2

$$F_{N_p} = \begin{bmatrix} 1 & 1 & 1 & \dots & 1 & 1 \\ 1 & \omega & \omega^2 & \dots & \omega^{N_p-2} & \omega^{N_p-1} \\ 1 & \omega^2 & \omega^4 & \dots & \omega^{2(N_p-2)} & \omega^{2(N_p-1)} \\ 1 & \omega^3 & \omega^6 & \dots & \omega^{3(N_p-2)} & \omega^{3(N_p-1)} \\ \vdots & \vdots & \vdots & \ddots & \vdots & \vdots \\ 1 & \omega^{N_p-1} & \omega^{2(N_p-1)} & \dots & \omega^{(N_p-2)(N_p-1)} & \omega^{(N_p-1)(N_p-1)} \end{bmatrix}$$

$W/2$      $W/2$

$F_{N_p,W}$

$$P = \begin{bmatrix} 1 & 1 & 1 & 1 \\ 1 & \omega & \omega^{N_p-2} & \omega^{N_p-1} \\ 1 & \omega^2 & \omega^{2(N_p-2)} & \omega^{2(N_p-1)} \\ 1 & \omega^3 & \omega^{3(N_p-2)} & \omega^{3(N_p-1)} \\ \vdots & \vdots & \vdots & \vdots \\ 1 & \omega^{N_p-1} & \omega^{(N_p-2)(N_p-1)} & \omega^{(N_p-1)(N_p-1)} \end{bmatrix}$$

**FIG. 3**

23

400

| 410 | 420 | 440 | 450 |

Data symbols → Spectral shaping by nulling → $N_{\text{FFT}}$-point IDFT → $\mathcal{M}_1$

430 — Sequence generation of $\sum_{p \in \mathcal{P}_1} p$ and mapping to $\mathcal{R}_1$ → $\mathcal{R}_1$

Data symbols → Spectral shaping by nulling → $N_{\text{FFT}}$-point IDFT → $\mathcal{M}_s$

$N_{\text{DAFT}}$-point IDAFT

Sequence generation of $\sum_{p \in \mathcal{P}_g} p$ and mapping to $\mathcal{R}_g$ → $\mathcal{R}_g$

Data symbols → Spectral shaping by nulling → $N_{\text{FFT}}$-point IDFT → $\mathcal{M}_{N_s}$

Sequence generation of $\sum_{p \in \mathcal{P}_{N_g}} p$ and mapping to $\mathcal{R}_{N_g}$ → $\mathcal{R}_{N_g}$

CP insertion and P/S → DAC

460

**FIG. 4**

FIG. 5

$v_c - \dfrac{W}{2}$    $v_c + \dfrac{W}{2}$

-1    -1/2    0    1/2    1    Digital frequency

$v_{c,l}$    $\dfrac{v_{c,l} + v_{c,r}}{2}$    $v_{c,r}$

-1    -1/2    0    1/2    1    Digital frequency

$v_c^{\text{out}}$    $v_c - \dfrac{W}{2}$    $v_c + \dfrac{W}{2}$

-1    -1/2    0    1/2    1    Digital frequency

**FIG. 6**

obtaining, by a device, a first pilot sequence according to a sequence length and a frequency bandwidth, wherein the first pilot sequence comprises a set of pilot symbols ⌐ 701

obtaining, by the device, a plurality of chirp signals, wherein the number of the plurality of chirp signals is equal to the sequence length ⌐ 702

generating, by the device, a linear combination of the plurality of chirp signals with the set of pilot symbols serving as linear combination coefficients, to obtain a second pilot sequence ⌐ 703

**FIG. 7**

800 ⌐

802

804

PROCESSOR

MEMORY

PROGRAM CODE ~ 806

COMMUNICATION INTERFACE

808

**FIG. 8**

**DAFT domain**     **Time domain**

Discrete
signal with
BW $(v_1, v_2)$

$s_0$ →
$s_1$ →

$N_{\mathrm{DAFT}}$-point
**IDAFT**

→ $x_0$
→ $x_1$

Discrete signal
with BW $(v_1, v_2)$

$s_{N_{\mathrm{DAFT}}-1}$ →

→ $x_{N_{\mathrm{DAFT}}-1}$

**FIG. 9**

**DAFT domain**     **Time domain**

0 →

0 →

Discrete
signal with
BW $(v_1, v_2)$

$s_0$ →

$s_{N-1}$ →

$N_{\mathrm{DAFT}}$-point
**IDAFT**

→ $x_0$
→ $x_1$

Discrete signal with
**approximate** BW
$(v_1, v_2)$ (due to $N <$
$N_{\mathrm{DAFT}}$)

0 →

0 →

→ $x_{N_{\mathrm{DAFT}}-1}$

**FIG. 10**

1100

1110　　　　　　1120　　Noise $\eta$　　1130

$s[m]$ → TRANSMITTER $(c_1,c_2)$ → $x[m]$ → CHANNEL $h[l]$ → ⊕ → $r[m]$ → RECEIVER $(c_1,c_2)$ → $\hat{s}[m]$

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Affine Frequency Division Multiplexing for Next Generation Wireless Communications. **ALI BEMANI et al.** ARXIV.ORG. CORNELL UNIVERSITY LIBRARY, 03 May 2022

- Pilot Aided Channel Estimation for AFDM in Doubly Dispersive Channels. **YIN HAORAN et al.** 2022 IEEE/CIC INTERNATIONAL CONFERENCE ON COMMUNICATIONS IN CHINA (ICCC). IEEE, 11 August 2022, 308-313